# EUROPEAN PATENT SPECIFICATION

(11) **EP 3 425 464 B1**
(45) Date of publication and mention of the grant of the patent: **30.03.2022**
(21) Application number: 16892468.6
(22) Date of filing: 29.02.2016
(51) Int. Cl.: G05B 19/418, G06Q 50/04

(54) **WORK MANAGEMENT SYSTEM AND WORK MANAGEMENT METHOD**
ARBEITSVERWALTUNGSVORRICHTUNG UND ARBEITSVERWALTUNGSVERFAHREN
DISPOSITIF DE GESTION DE TRAVAIL ET PROCÉDÉ DE GESTION DE TRAVAIL

(43) Date of publication of application: 09.01.2019
(73) Proprietor: Hitachi Systems, Ltd., Tokyo 141-8672 (JP); Kyoto Tool Co., Ltd., Kyoto-shi Kyoto 612-8393 (JP); Hitachi, Ltd., Tokyo 100-8280 (JP)
(72) Inventor: INOUE, Kunihiro, Matsudo-shi Chiba 271-0092 (JP); YAMAUCHI, Shigeru, Tokyo 141-8672 (JP); KAWAZOE, Toru, Tokyo 141-8672 (JP); SARUYAMA, Masaaki, Tokyo 141-8672 (JP); NISHIOKA, Masaaki, Kyoto 613-0034 (JP); NAKATA, Shogo, Kyoto 613-0034 (JP); OKADA, Norihisa, Tokyo 100-8280 (JP)
(74) Representative: Zimmermann, Tankred Klaus
(86) International application number: PCT/JP2016/056130
(87) International publication number: WO 2017/149623

(56) References cited:
- EP-A1- 2 911 023
- JP-A- 2006 185 314
- JP-A- 2009 099 100
- JP-A- 2009 099 100
- US-A1- 2005 113 949

## Description

### {Technical Field}

The present invention relates to a work management system and a work management method.

### {Background Art}

Conventionally, there has been known a work management system enabling high-quality work management where traceability is secured by associating various information of bolts or the like obtained through tools and measuring instruments with tools used for the work, measuring instrument data, and ID information of workers (for example, refer to Patent Literature 1).

JP2009-099100A discloses an operation management system capable of ensuring traceability for different data associated to the tightening of a flange and preventing an input error of a set tightening value. The document refers mainly to a work manager system.

### {Citation List}

### {Patent Literature}

{PTL 1} JP 5065851B

### {Technical Problem}

When a railway vehicle is manufactured, particularly a manufacturing process for attaching components such as electric components to the railway vehicle mainly consists of the following processes (1) to (5).
(1) Components to be attached to the railway vehicle are conveyed to a manufacturing site.
(2) Fastening members (bolts, nuts, and the like) for attaching the conveyed components to the railway vehicle are served at the manufacturing site.
(3) The conveyed components are fastened and attached at predetermined positions of the railway vehicle at a predetermined torque with the served fastening members.
(4) Fastening state of the fastening members with which the components are fixed to the railway vehicle is checked (inspected).
(5) Checked results are stored in a manufacturing quality record (traceability).

In the aforementioned processes, the work management system described in Patent Literature 1 enables improvement of traceability by associating each flange fastening work data with a tightening tool, a measuring instrument, used bolts and the like which are used to set and measure them. However, it is further demanded that proceeding of the predetermined works as scheduled can be easily checked (visualization) particularly regarding the respective processes of (2) to (5), and that man-hour of the manufacturing process is reduced. Similarly, in a maintenance process of the railway vehicle, it is further demanded that progress of a reattaching work in which the predetermined components are accurately fixed with predetermined fastening members can be easily checked (visualization) after the predetermined components are detached and inspected as scheduled, and that the man-hour of the maintenance process is reduced.

The present invention is made in consideration of at least one of the above-stated problems, and an object of the present invention is to provide a high-quality work management system and work management method capable of easily checking whether predetermined works proceed as scheduled in each process, i.e., a work (serving) preparing process, an attachment (detachment) work process, a work completion checking process, and the like, and reducing the man-hour.

### {Solution to Problem}

The invention is defined in the independent claims.

### {Advantageous Effects of Invention}

According to the present invention, it is possible to provide a high-quality work management device and work management method capable of easily checking whether predetermined works proceed as scheduled, and reducing man-hour.

### {Brief Description of Drawings}

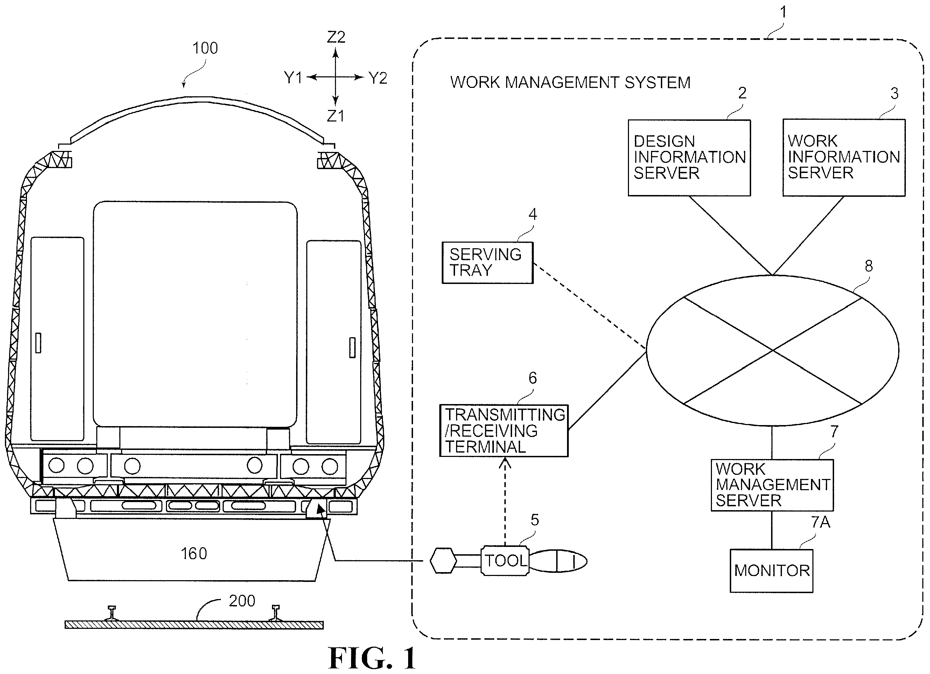

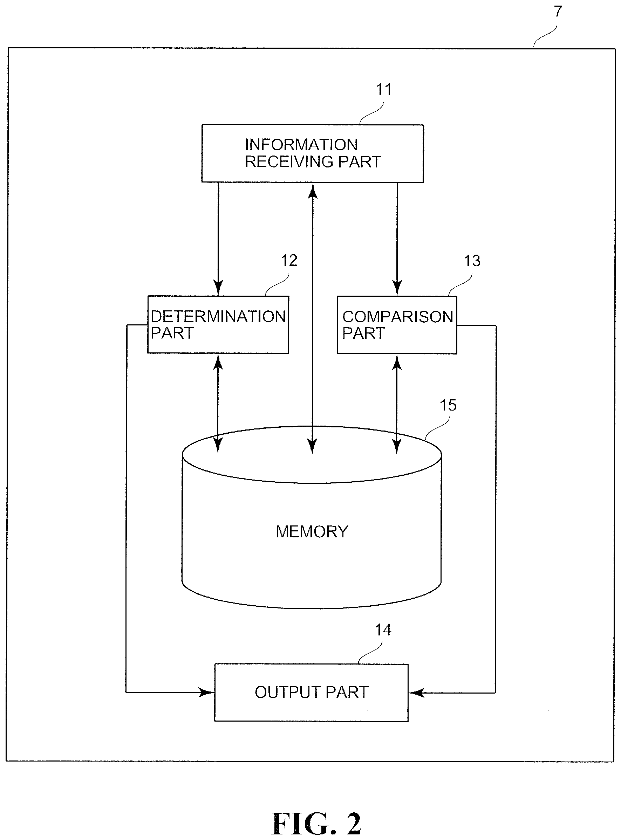

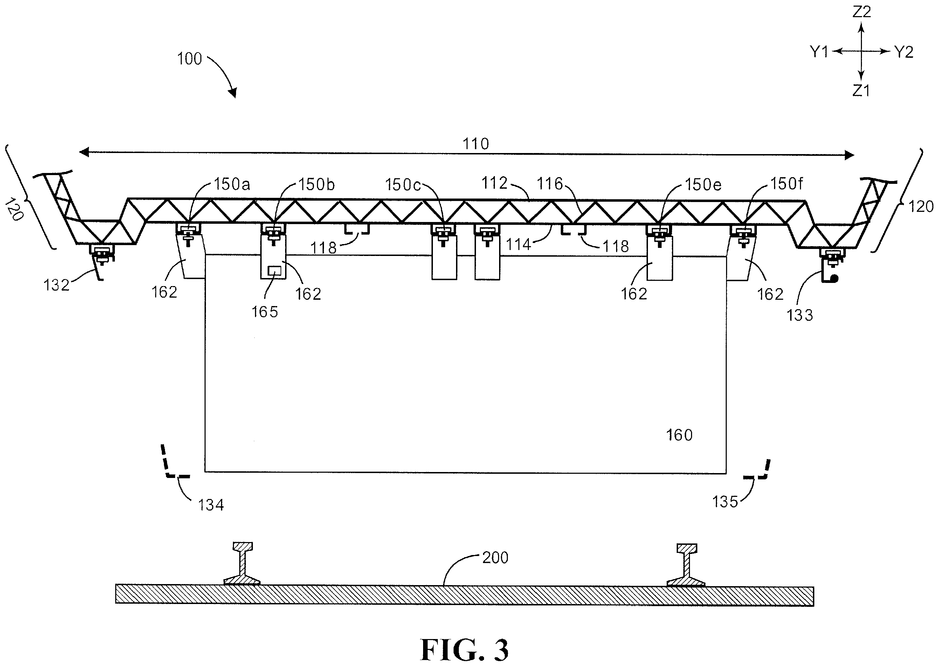

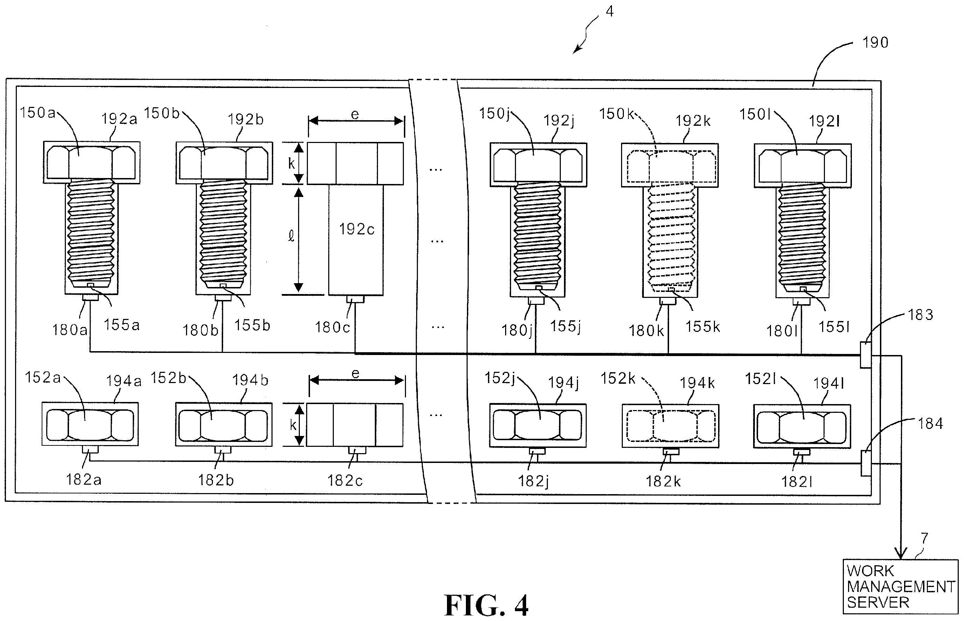

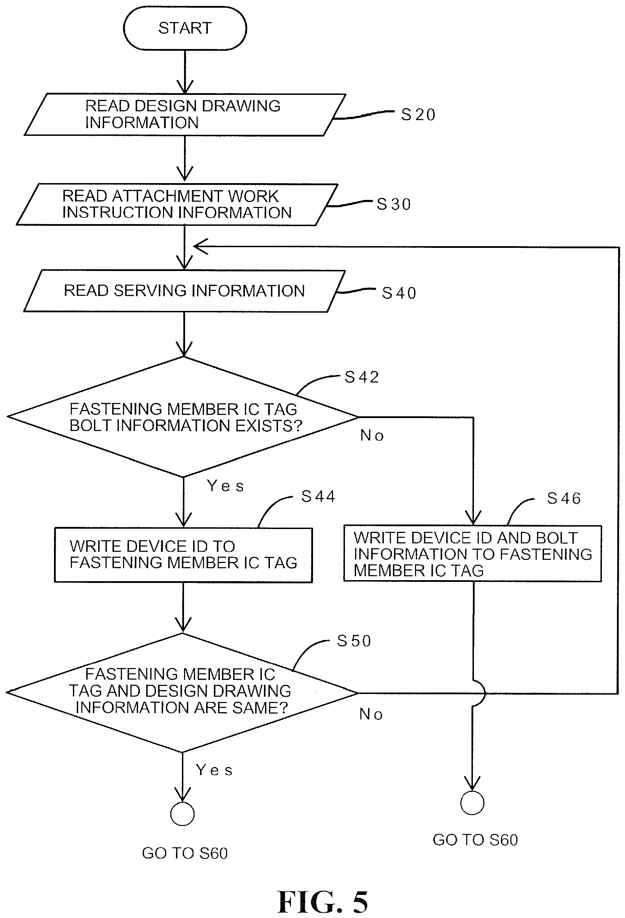

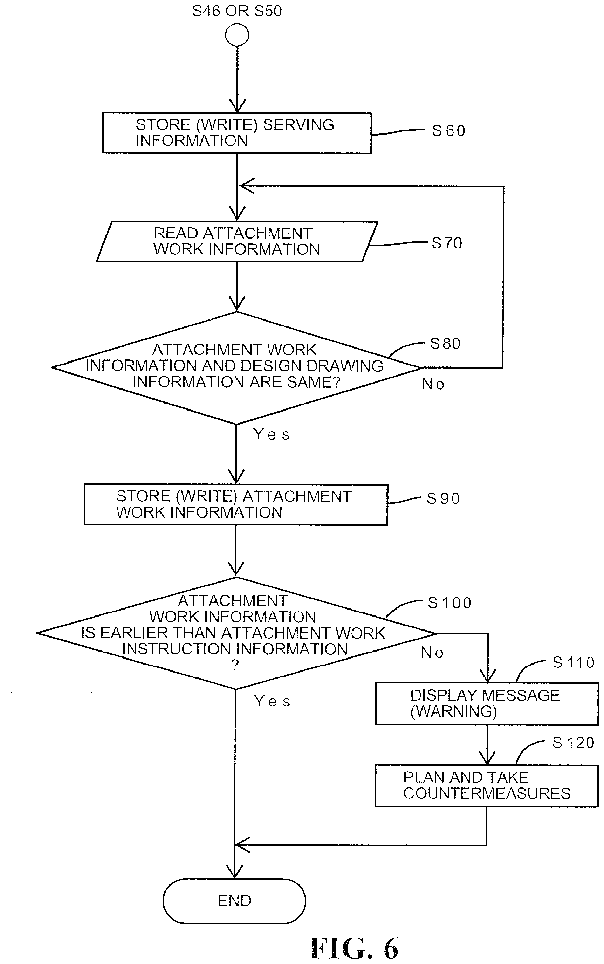

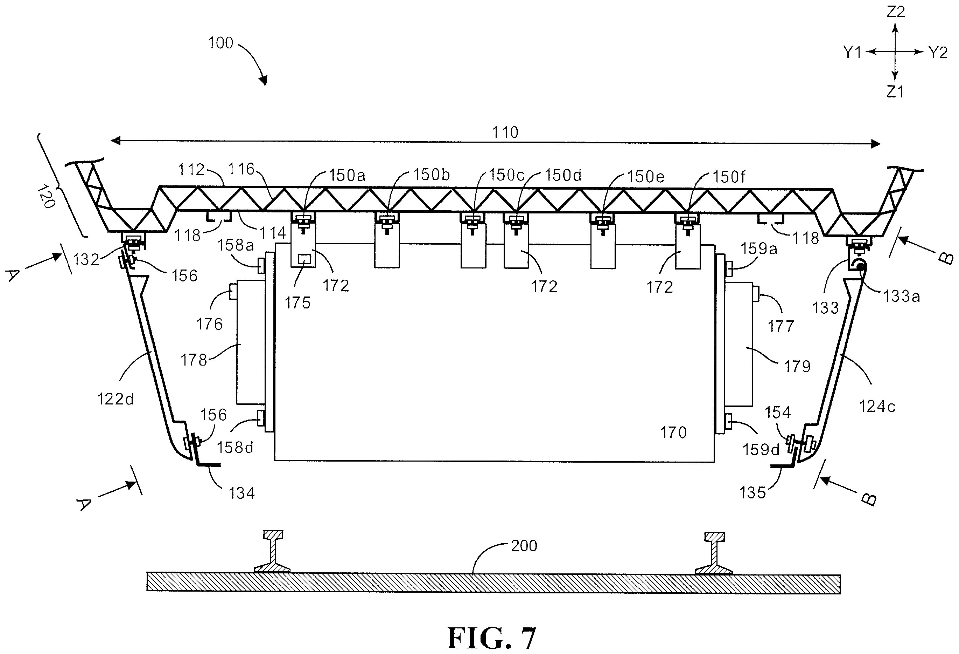

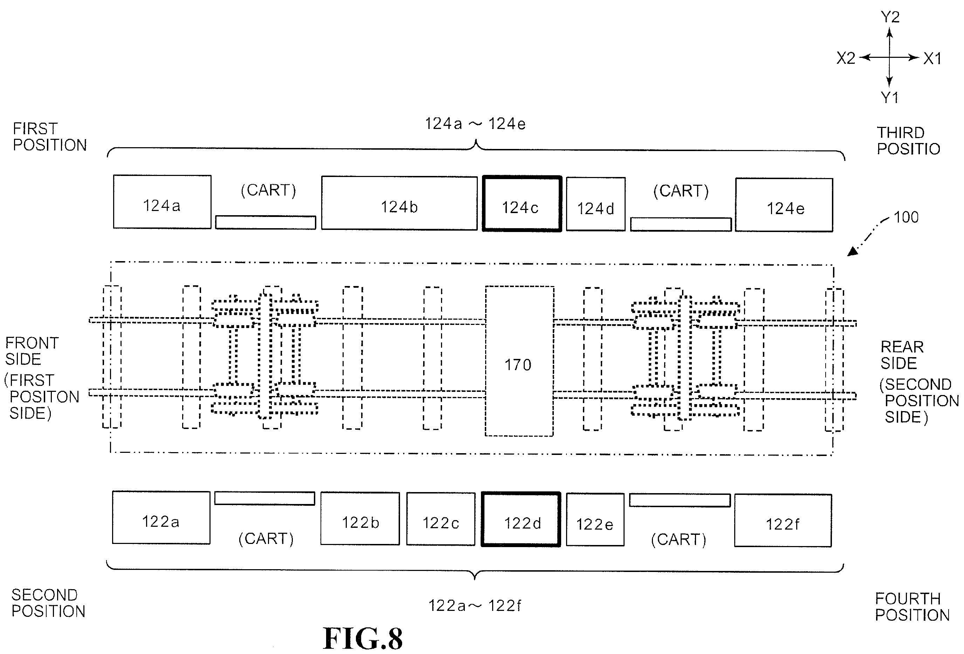

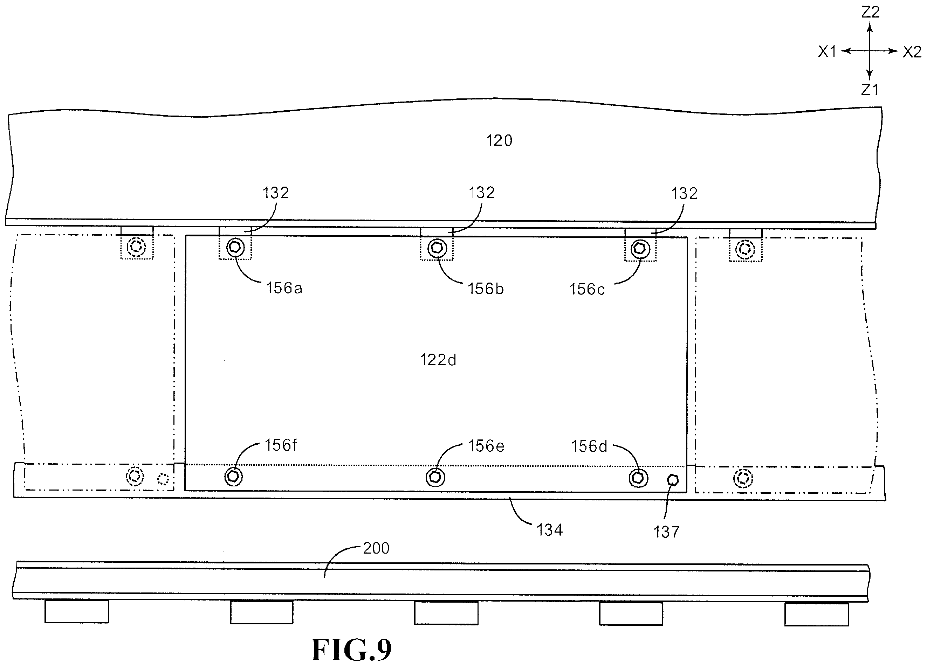

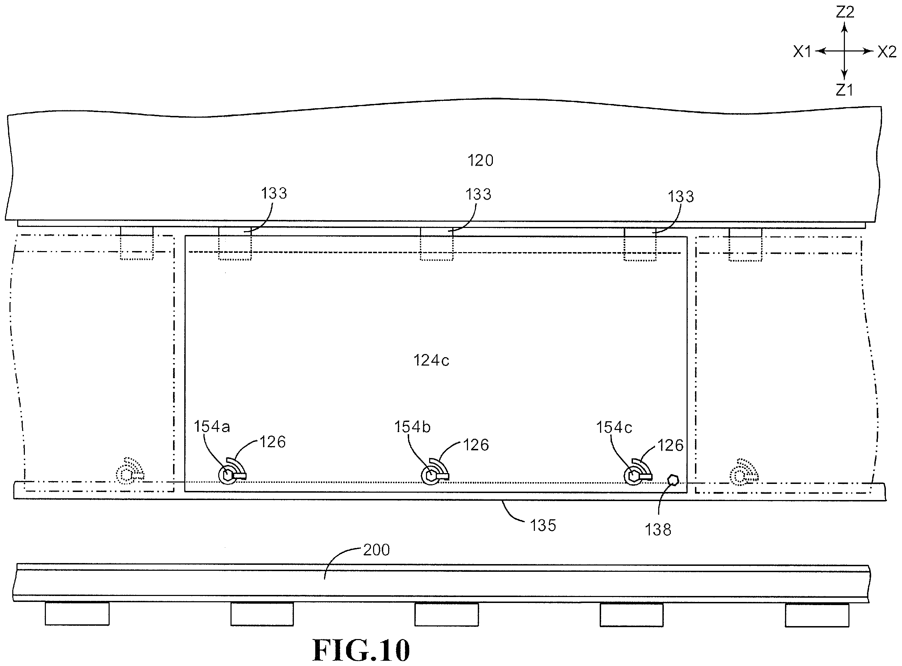

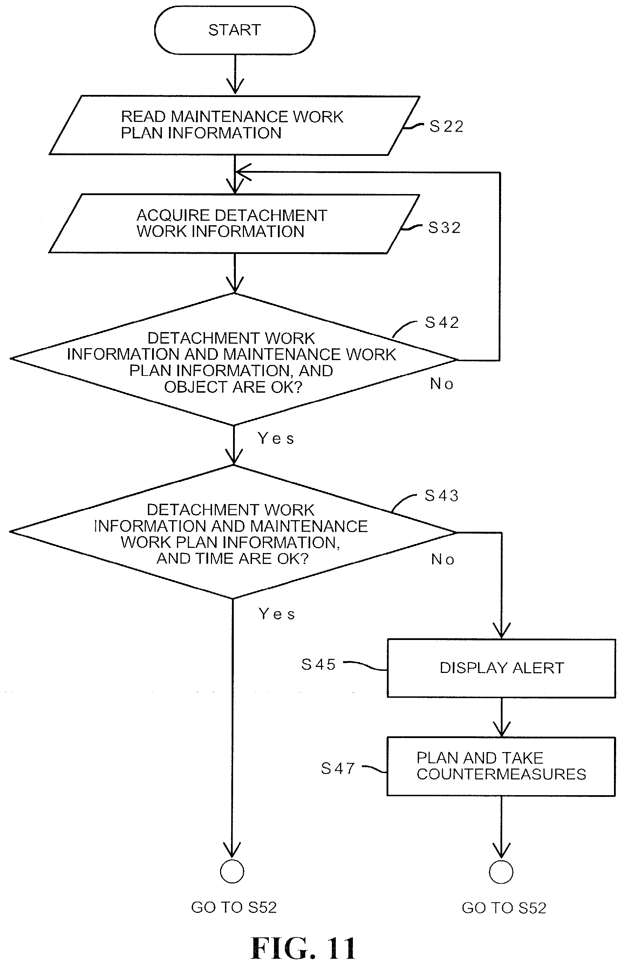

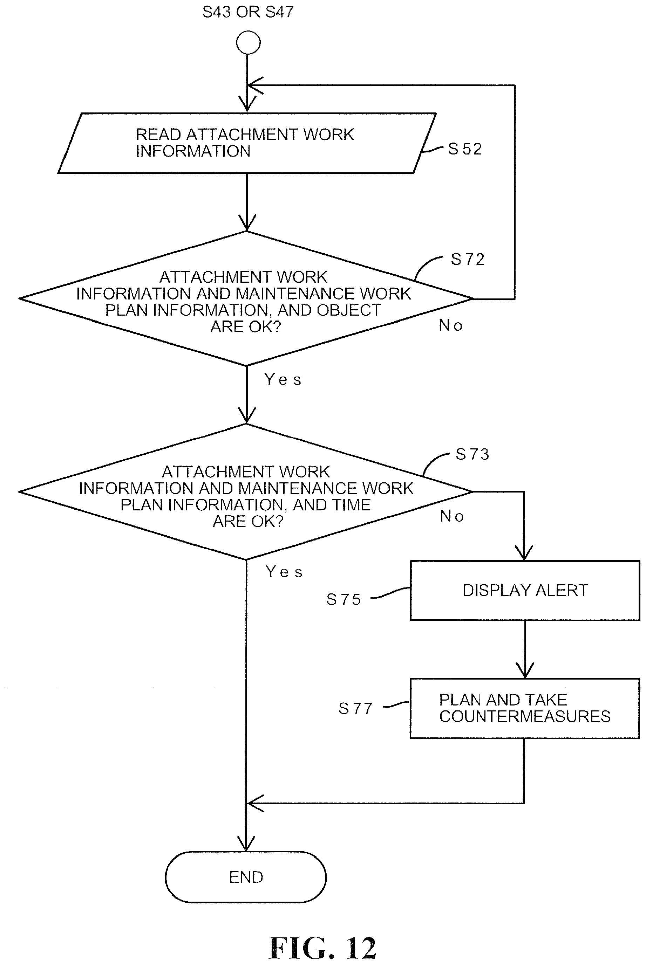

{Fig. 1} Fig. 1 is a view illustrating a whole configuration of a work management system and a cross-section of a railway vehicle according to an illustrative embodiment of the present invention.
{Fig. 2} Fig. 2 is a view illustrating a functional configuration of a work management server illustrated in Fig. 1.
{Fig. 3} Fig. 3 is a partial cross-sectional view intersecting with a longitudinal direction of the railway vehicle including devices at an underfloor area.
{Fig. 4} Fig. 4 is a schematic view of fastening members (bolts and nuts) with IC tags which are served on a serving tray.
{Fig. 5} Fig. 5 is a flowchart illustrating an example of a manufacturing work process attaching devices to the underfloor area of the railway vehicle.
{Fig. 6} Fig. 6 is a flowchart illustrating the example of the manufacturing work process attaching the devices to the underfloor area of the railway vehicle.
{Fig. 7} Fig. 7 is a partial cross-sectional view intersecting with a longitudinal direction of the railway vehicle including the devices fixed to the underfloor area and side covers which cover lateral sides of the devices.
{Fig. 8} Fig. 8 is a schematic view illustrating a disposing state of the side covers provided on both ends in a width direction of an underframe forming the railway vehicle.
{Fig. 9} Fig. 9 is a front view of the side cover fastened to a vehicle body with bolts (a view from the line A-A in Fig. 7).
{Fig. 10} Fig. 10 is a front view of the side cover fastened to the vehicle body with mechanical switches (a view from the line B-B in Fig. 7).
{Fig. 11} Fig. 11 is a flowchart illustrating an example of a maintenance work process of the devices provided at the underfloor area of the railway vehicle.
{Fig. 12} Fig. 12 is a flowchart illustrating the example of the maintenance work process of the devices provided at the underfloor area of the railway vehicle.

### {Description of illustrative Embodiments}

Hereinafter, Example 1 and Example 2 are cited as illustrative embodiments of the present
invention and explained in detail with reference to the drawings. Example 1 explains manufacturing work to attach devices to an underfloor area of a railway vehicle as an example, and Example 2 explains maintenance work of devices equipped to the railway vehicle as an example.

### [Example 1]

Fig. 1 is a view illustrating a whole configuration of a work management system 1 and a cross-sectional view of a railway vehicle 100 according to an illustrative embodiment of the
present invention. The work management system 1 illustrated in Fig. 1 is a system to manufacture or maintain the railway vehicle 100, and includes a design information server 2, a work information server 3, a serving tray 4, a tool 5, a transmitting / receiving terminal 6, and a work management server 7. Each server and each device illustrated in Fig. 1 are connected with each other through a communication network 8. In the following explanation, respective directions relating to the railway vehicle 100 are defined as a longitudinal direction X (a rail direction), a width direction Y (a crosstie direction), and a direction perpendicular to a plane of the longitudinal direction X and the width direction Y is defined as a height direction Z. In the longitudinal direction X of the railway vehicle 100, a direction from a front side toward a rear side is denoted as an X1 direction, and a reverse direction to the X1 direction is denoted as an X2 direction. In the width direction Y, a direction from a side where the work management system 1 is illustrated toward a side where the cross-sectional view of the railway vehicle 100 is illustrated in Fig. 1 is denoted as a Y1 direction, and a reverse direction to the Y1 direction is denoted as a Y2 direction. Similarly, in the height direction Z, a direction from the railway vehicle 100 side toward a later-described track 200 side is denoted as a Z1 direction, and a reverse direction to the Z1 direction is denoted as a Z2 direction.

The design information server 2 is a server which stores data (information) of design drawings or the like, extracts necessary design information from design drawing information and putting them together, and provides this information according to a request. The design information server 2 is able to provide data such as the design drawings according to an acquisition request from later-described other servers or portable terminals (not illustrated) held by workers, and so on.

The work information server 3 is a server to store manufacturing work instructions indicating manufacturing contents of the railway vehicle 100, maintenance work instructions indicating contents of maintenance works, and the like. The work information server 3 extracts necessary data from these work instructions and put them together and provides these data according to a request. The work information server 3 also stores data regarding fastening members such as bolts served on the serving tray 4. The work information server 3 is able to provide data such as the manufacturing work instructions and the maintenance work instructions according to an acquisition request from the later-described other servers or the portable terminals (not illustrated) held by the workers, and so on. The manufacturing work instructions are sometimes called specifications. The maintenance work instructions are sometimes called plans or instruction manuals.

Both the design information server 2 and the work information server 3 are not necessarily required, and the design information server 2 and the work information server 3 may be operated as a common information server.

The serving tray 4 is a tray serving fastening members such as IC tag embedded bolts and nuts (examples of fastening members each having a first IC tag), which relate to work, before the manufacturing work and the maintenance work. Though details will be described later, the serving tray 4 has a function detecting a serving state of the fastening members such as the bolts and the nuts, and is able to transmit the detected information to the work management server 7 through the communication network 8 or through the later-described tool 5, or the like.

The tool 5 is a fastening member having the first IC tag which is described in claims, and is an example of a tool to fasten or loosen (tightening/loosening) a component (a device 160 or the like illustrated in Fig. 3) having a later-described second IC tag. The tool 5 is, for example, a torque wrench or the like, and has functions capable of reading/writing information stored in the first IC tag of the fastening member and the component having the second IC tag, and transmitting/receiving these information with external devices.

The transmitting / receiving terminal 6 is, for example, a tablet PC, and is a terminal provided at each place of the manufacturing site and the maintenance site to transmit/receive to/from the tool 5. As a hardware configuration of the transmitting / receiving terminal 6, there are: an application processor configured by, for example, a CPU, a GPU, a memory controller, a peripheral device controller, a display controller, and so on; a modem (baseband), a radio communication part; a power supply; an audio LSI; a camera device; a GPS module; a Bluetooth module; various sensors such as a gyro sensor; a display; and so on. The transmitting / receiving terminal 6 is able to execute various data processing by the application processor loading programs stored in a memory into the RAM and executing the programs. The hardware configuration of the transmitting / receiving terminal 6 is not limited to the above-described configuration, and can be appropriately changed. The communication device is not limited to the tablet PC, and may be a smartphone, a cellular phone, a wireless router, and the like.

The work management server 7 is an example of a work management system in
claims. The work management server 7 collects information transmitted from the transmitting / receiving terminal 6. For example, the work management server 7 is able to compare and verify information from the above-stated various servers and to output a traceability result. A monitor 7A or the like which displays the collected information and messages such as an alert, a warning in real time is connected to the work management server 7 as necessary.

The communication network 8 is a communication medium where the above-stated servers, tools, terminals, and so on are connected. The communication network 8 is formed of, for example, any of Internet network, VPN network, cellular phone network, landline telephone lines, WAN, LAN, or a combination of these.

The design information server 2, the work information server 3, the work management server 7 each are what is called a server computer, and they each include, for example, a CPU (central processing unit), a RAM (random access memory), a ROM (read only memory), an HDD (hard disk drive), a communication interface, and the like, and later-described functions held by each server can be enabled by the CPU reading programs stored in the ROM, the HDD, and so on into the RAM and executing the programs. The hardware configuration of each of the design information server 2, the work information server 3, and the work management server 7 is not limited to the above-described configuration, and can be appropriately changed. For example, the configuration may include an SSD (flash solid state drive) instead of the HDD or in addition to the HDD. Further, the hardware configuration of each of the design information server 2, the work information server 3, and the work management server 7 may include output units such as a display and a speaker, and input units such as a mouse and a keyboard in addition to the above-stated configuration.

Fig. 2 is a view illustrating a functional configuration of the work management server 7 illustrated in Fig. 1. The work management server 7 includes an information receiving part 11, a determination part 12, a comparison part 13, an output part 14, and a memory 15.

The information receiving part 11 is an example of an information acquisition part in the claim. The information reception part 11 receives tightening/loosening information (including information regarding tightened at a predetermined torque, or loosened) when components (components having the second IC tags) are attached or detached (attachment/detachment) by tightening or loosening (tightening/loosening) the fastening members such as bolts and nuts (fastening members each having the first IC tags). Time information when the fastening member is tightened/loosened may be contained in the tightening/loosening information. The information receiving part 11 receives various information from the above-stated design information server 2, work information server 3, and transmitting / receiving terminal 6.

When the information receiving part 11 receives the tightening/loosening information, the determination part 12 determines whether first combination information between the fastening members such as the bolts and the nuts (information indicated by the first IC tags) read from the tightening/loosening information and the components (information indicated by the second IC tag) such as side covers 122d (124c), the device 160, or maintenance components (filter boxes 178, 179) which arc tightened/loosened with these fastening members is correct. The determination part 12 informs a determination result to the output part 14.

The comparison part 13 compares predetermined second combination information (received by the information receiving part 11) of a component listed in a design drawing or a work instruction and fastening members which fasten the component, and the first combination information.

The comparison part 13 compares time information received by the information receiving part 11 and time information of predetermined work set in advance. The comparison part 13 informs comparison results to the output part 14.

The output part 14 outputs information regarding progress of predetermined work based on the determination result of the determination part 12 and the comparison results of the comparison part 13. An output destination of the output part 14 may be the monitor 7A held by the work management server 7, or may be a communication part (not illustrated) of the work management server 7 in order to transmit the information to the transmitting / receiving terminal 6 through the communication network 8.

The memory 15 is able to temporarily store or accumulate information received by the information reception part 11 from each server. The memory 15 is able to provide determination information to be a reference at the determination process of the determination part 12 and the comparison process of the comparison part 13. For example, the memory 15 is able to record or accumulate design drawing information (for example, a drawing number, a drawing name, a device (component) name, a bolt size, a bolt length under head, bolt material, a tightening torque, the number of bolts, and the like) received from the design information server 2, work instruction information (for example, a work name, a work date, vehicle information, a work site, a scheduled work start time, a device (component) name, a scheduled work end time, and the like) received from the work information server 3, serving information (for example, a work name, a work date and time, a worker ID, a bolt ID, a bolt size, a bolt length under head, bolt material, a tightening torque, the number of bolts, and the like), and so on.

### (Regarding configuration of railway vehicle 100)

Next, a structure of an underfloor area of the railway vehicle 100 is explained before manufacturing work to attach the device to the underfloor area of the railway vehicle 100 is explained. Fig. 3 is a partial cross-sectional view perpendicular to the longitudinal direction X of the railway vehicle provided with the device 160 at the underfloor area.

The railway vehicle 100 is provided with an underframe 110 forming a floor face, side structures 120 which stand on both ends in the width direction Y of the underframe 110, a roof structure (not illustrated) which is placed on upper-ends of the side structures 120, and so on. Upper metal fittings 132 (133) where side covers covering a device (refer to Fig. 8) are fixed are provided at both ends in the width direction Y of lower-ends of the side structures 120, along the longitudinal direction X. Lower metal fittings 134 (135) paired with the upper metal fittings 132 (133) are provided in the Z1 direction to be lower sides of the upper metal fittings 132 (133).

The underframe 110 and the side structures 120 are each formed of a hollow extruding material made up of a vehicle-interior-side surface plate 112 and a vehicle-exterior-side surface plate 114, and a plurality of connection plates (connection ribs) 116 connecting these both surface plates. The hollow extruding material is made of aluminum alloy, and it is extrusion-molded in a direction along the longitudinal direction X. C channel parts 118 each having a C-shaped cross section intersecting with the longitudinal direction X are provided on a vehicle-exterior side of the vehicle-exterior-side surface plate 114. The C channel parts 118 are extrusion-molded integrally with the hollow extruding material forming the underframe 110, and top parts of fastening members (bolts) which fix the devices or the like provided at a lower part of the underframe 110 are inserted into grooves of the C channel parts 118.

The devices 160 such as: a main converter which supplies electric power driving the railway vehicle 100 along the track 200 to a main motor provided at a cart (not illustrated); an auxiliary power supply which generates electric power supplied to an air conditioner, lighting, and the like; an air compressor which generates compressed air supplied to brakes or side sliding doors; and a storage battery box equipped with storage batteries or the like (a battery box) are provided at the underfloor area of the railway vehicle 100.

The device 160 has attaching legs 162 which are to be abut with a lower surface of the underframe 110 along a peripheral edge at an upper-end part of the device 160, and after screw parts of bolts 150a to 150f whose top parts are inserted into the C channel parts 118 are inserted into bolt holes of the attaching legs 162, nuts or the like are engaged with these screw parts, resulting in that the device 160 is fixed to the vehicle body.

### (Regarding serving tray)

Fig. 4 is a schematic view of fastening members (bolts and nuts) each with the IC tag, the fastening members being served on the serving tray 4. At the manufacturing site of the railway vehicle 100, there is a serving (preparation) work preparing bolts or the like supplied to manufacturing work, the serving work being a part of a procedure of the manufacturing work attaching the device 160 to the underfloor area of the railway vehicle 100. This serving work is a work collecting the required number of bolts or the like to be used in the manufacturing work by each classification (size, material) based on design drawing information described in the design drawing, and supplying them to the manufacturing work site.

For example, there is a case when the device 160 is attached to the underfloor area of the railway vehicle 100 with 16 pieces of stainless hexagon head cap bolts each in M16 size with length under head of 60 mm, and 16 pieces of nuts which engage with these hexagon head cap bolts. In this case, the serving work is a work serving the 16 pieces of bolts each in the above-stated size and the 16 pieces of nuts (including washers or the like according to need) to the manufacturing site where the device 160 is to be attached to a lower part of the vehicle body until a predetermined time (work start time).

In order to attach the device 160 to the railway vehicle 100, bolts 150 are subjected to the preparation work. As illustrated in Fig. 4, the serving tray 4 is provided with recessed parts 192a, 192b, 192c, ... (omission), 192j, 192k, 1921 (hereinafter, they are denoted as recessed parts 192 if there is no need to particularly distinguish). Each of bolts 150a, 150b, 150j, 150k, 150l (hereinafter, they are denoted as bolts 150 if there is no need to particularly distinguish) is accommodated in each of the recessed parts 192. IC tags 155a, 155b, 155j, 155k, 155l (hereinafter, they are denoted as IC tags 155 if there is no need to particularly distinguish) are provided at end parts (end faces) of screw parts of the bolts 150. There are provided reader/writers 180a, 180b, 180c, ... (omission), ... 180j, 180k, 1801 (hereinafter, they are denoted as reader/writers 180 if there is no need to particularly distinguish) to get access to information in the IC tag (read the information, and write the information) at parts (in the vicinities) of the recessed parts 192 corresponding to the IC tags 155. The reader/writers 180 are connected to a communication part 183 to communicate with the work management server 7. The IC tag is an abbreviation of a radio frequency identification tag, and equipped with a storage device and functions of a radio communication. The number of the reader/writers 180 may correspond to the number of the recessed parts 192 or the like, or the reader/writers 180 may be brought together at the communication parts 183, 184, or the like, and a circuit of an IC tag detection part of the reader/writer 180 may be split into ports by a multiplexer method. That is, the reader/writers 180 or the like in Fig. 4 may be the independent reader/writers 180, or the reader/writers 180 are brought together at the communication parts 183, 184, or the like, and only the IC tag detection parts are disposed to correspond to the number of the recessed parts 192 or the like by the multiplexer method which enables a detection port split operation, and each of them may be cabled (wiring in Fig. 4, in this case, is bundled wires).

The recessed part 192 has a shape of a dimension e, a dimension k, and a dimension 1 (each with a little larger size than a bolt size in consideration of taking in and out of the bolt) corresponding to the bolt size when the bolt 150 prepared in the serving work is the M16 size (bolt size) with the length under head of 60 mm.

The communication part 183 has functions of transmitting the information in the IC tags 155 read by the reader/writers 180 to the work management server 7, receiving information to be written to the IC tags 155 from the work management server 7 and transmitting the information to the reader/writers 180.

Since the bolt 150 placed on the serving tray 4 is used in a mode that the head of the bolt is inserted into the C channel part 118 of the underframe 110, the IC tag is provided at the end face of the screw part, which is an opposite side of the head part (an approximately hexagonal prism portion). Accordingly, the reader/writer 180 provided at the serving tray 4 is provided at a position facing the end face of the screw part so as to be able to get access to IC tag information, the IC tag being provided at the end face of the screw part of the bolt 150. The position where the reader/writer 180 is provided is not limited to the above-stated example, as long as it is the position capable of getting access to the IC tag information, the IC tag being provided at an arbitrary place of the bolt 150.

Similarly, the serving tray 4 is provided with recessed parts 194a, 194b, 194c, ... (omission), 194j, 194k, 1941 (hereinafter, they are denoted as recessed parts 194 if there is no need to particularly distinguish) in order to accommodate the nuts to be engaged with the bolts 150. The recessed part 194 has a shape with the dimension e and the dimension k (each dimension is a little larger than the nut size in consideration of taking in and out of the nut) corresponding to the above-stated nut size. There are provided reader/writers 182a, 182b, 182c, ... (omission), ... 182j, 182k, 1821 (hereinafter, they are denoted as reader/writers 182 if there is no need to particularly distinguish) at positions of the recessed parts 194 corresponding to IC tags or the like (not illustrated) provided at the nuts accommodated in the recessed parts 194, and the communication part 184 which is connected to the reader/writers 182 and communicates with the work management server 7.

The communication part 184 has functions of transmitting information written to the IC tags provided at the nuts, the information being read by the reader/writers 182, to the work management server 7, receiving information to be written to the IC tags provided at the nuts from the work management server 7 and transmitting the information to the reader/writers 182.

Fig. 5 and Fig. 6 are flowcharts each illustrating an example of a manufacturing work process attaching components (devices) to the underfloor area of the railway vehicle 100. At a factory manufacturing the railway vehicle 100, an attachment work (manufacturing work) attaching the device 160 to the underfloor area of the railway vehicle 100 is cited as an example, and operations of the work management system 1 and their effects according to the manufacturing work are explained by each step (S). The device 160 is exemplified as an example of the component attached to the railway vehicle 100. The attachment work has the same meaning as the manufacturing work. In the flowchart, the following processes start (START) when the work management server 7 is started or work management system functions on the work management server 7 side are enabled.

Step S20: The work management server 7 acquires design drawing information which is drawn in a design drawing and computerized (an electronic tag) from the design information server 2 through the communication network 8 (an acquisition of design drawing information, and a reading process). The design drawing information described here includes, for example, a drawing number, a drawing name, a component (device) name, a device ID, a bolt ID, a bolt M size, a bolt length under head (1), bolt material, the number of bolts, a tightening torque, and the like.

Step S30: The work management server 7 acquires work instruction information (a work name, a work date and time, vehicle information (a series name, a car formation name, a vehicle number), a work site, a scheduled start time, a component (device) name (component ID), a scheduled end time, and the like) which is described in an attachment work instruction and computerized from the work information server 3 through the communication network 8 (an acquisition of attachment work instruction information, and a reading process). When the attachment work instruction information (S30) is contained in the design drawing information (S20), the work management server 7 does not necessarily acquire the attachment work instruction information (S30).

Step S40: The work management server 7 acquires the information in the IC tag 155 of the fastening member (bolt 150) which is fitted into the recessed part 192a or the like of the serving tray 4 through the communication network 8 (a serving information reading process).

Step S42: The work management server 7 determines whether the IC tag 155 stores bolt information such as a bolt ID, a bolt M size, a bolt length under head, bolt material, and a tightening torque (an information presence/absence determination process). When the bolt information is stored (YES in Step S42), the component (device) ID contained in the design drawing information (S20) or the attachment work instruction information (S30) is written to the IC tag 155 (a component (device) ID writing process).

Step S46: When the bolt information is not stored in the IC tag 155 (NO in Step S42), the work management server 7 writes the bolt information and the component (device) ID contained in the design drawing information (S20) or the attachment work instruction information (S30) to the IC tag 155 (writing of the component (device) ID and the bolt information).

Step S50: The work management server 7 compares the bolt information (serving information) stored in the IC tag 155 of the fastening member served on the serving tray 4 with the design drawing information (S20) (a comparison process). When the serving information differs from the design drawing information based on the design drawing information (NO in Step S50), the work management server 7 displays a message and requests workers who arc in charge of the serving work to perform a re-serving work of a fastening member (bolt 150) having correct bolt information (a message display process, and a re-serving request process).

Step S60: When it is verified that the fastening member (bolt 150) has the same bolt information as the design drawing information (S20) (YES in Step S50), the work management server 7 stores the bolt information of the served fastening member (bolt 150), the component (device) ID, and the like to the memory 15 as the serving information together with a serving work completion time (a recording process). During Step S40 to Step S60, the fastening member (bolt 150) is placed in the recessed part 192a of the serving tray 4.

Step S70: The work management server 7 reads the attachment work information and presents the attachment work information for the workers. Attachment workers who are occupied with the attachment work (hereinafter, they are denoted as workers) attach the device 160 to the underfloor area of a vehicle series AA, a formation BB, and a vehicle number C based on the attachment work instruction information described in the attachment work instruction. Attachment instruction contents may be displayed on the monitor 7A or the like provided at the site, or may be displayed on portable terminals (not illustrated) which are owned by the workers and are connectable to the communication network 8.

Here, the workers convey the device 160 loaded on a lifter or the like capable of being located in the longitudinal direction X, the width direction Y, and the height direction Z to a predetermined place of the underfloor area of the vehicle number C. The fastening members (bolts 150) each with the IC tags which are taken out of the serving tray 4 are inserted into the C channel parts 118 at the lower surface of the underframe 110 where the device 160 is to be attached.

The workers locate the device 160, and then raise the lifter such that upper surfaces of the attaching legs 162 are in contact with the lower surface of the underframe 110 (C channel parts 118). The fastening members (bolts 150) in a mode where each top part is inserted into the C channel part 118 and the screw part hangs down are to be inserted into bolt holes provided at the attaching legs 162 of the device 160.

Further, the workers fasten a nut 152a which engages with the fastening member (bolt 150) with the tool 5 (refer to Fig. 1) which has the function of reading/writing the IC tag information held by the IC tag of the fastening member (bolt 150) and a communication function with the communication network 8.

When the workers fasten the nut 152a which engages with the fastening member (bolt 150) with the tool 5, information of the tightening torque or the like (the information recorded in the IC tag 155 held by the fastening member (bolt 150) read by the tool 5) is displayed on a display part provided with the tool 5. The workers fasten the nut 152a at a predetermined tightening torque based on this display. The tool 5 writes the torque information fastening the nut 152a and a fastening completion time to the IC tag 155 (first IC tag) of the fastening member (bolt 150), and transmits this information to the work management server 7 through the communication network 8.

The workers read each worker ID and information in an IC tag (second IC tag) of a component identifier 165 (refer to Fig. 3) where the component (device) ID held by the device 160 is recorded with the tool 5 or the like, and transmits them to the work management server 7 through the communication network 8. If a shape of the component identifier 165 is set to an approximately hexagonal prism shape similar to the nut 152a engaged with the fastening member (bolt 150), it is not necessary for the workers to prepare another reader because the ID information recorded on the IC tag (second IC tag) of the component identifier 165 can be easily read with the tool 5 which fastens the nut 152a.

Step S80: The work management server 7 compares and verifies the design drawing information (S20) and the attachment work information (S70) (a comparison process between the attachment work information and the design drawing information). When there is no consistency between these information (NO in Step S80), the work management server 7 displays a screen prompting the workers to check the fastening work and do an additional work. For example, when one bolt among 16 pieces of bolts which are supposed to fix a device is not fastened at predetermined torque, messages indicating a torque shortage, a fastening work incompletion, a concrete bolt ID which is inconsistent, and the like are displayed on the monitor 7A, and a warning sound or the like is output.

Step S90: The work management server 7 stores the attachment work information which is verified (S80) to be the same as the design drawing information (S20) and the attachment work information (S70) to the memory 15 (storing (writing) of attachment work information). This attachment work information contains information verifying that a predetermined attachment object component is actually attached to a predetermined place (railway vehicle 100 or the like) with predetermined fastening members which are associated with the attachment object component.

The work management server 7 grasps that the attachment of the device 160 to the vehicle body is completed at a time when a last one piece of fastening tool (bolt 150) among the predetermined number of pieces is fastened, and stores this attachment work completion time to the memory 15 (storing (writing) of attachment work information).

Step S100: The work management server 7 compares and verifies the attachment work information stored in S90 and the attachment work instruction information (S30) read in S30. The work management server 7 determines whether the attachment work completion time contained in the attachment work information is earlier than the scheduled attachment work end time in the attachment work instruction information (the attachment work is completed according to the schedule of the attachment work instruction) (comparison between the attachment work information and the attachment work instruction information).

When the actual attachment work completion time is earlier than the scheduled attachment work end time, the device attachment work is completed at END. When the attachment work completion time is over or estimated to be over the scheduled attachment work end time, the work management server 7 displays messages on the monitor 7A or the like (S110), a work manager plans and takes countermeasures (S120), and the device attachment work is completed (END). After the device attachment work is completed, an inspection with a hammer (an inspection with an inspection hammer to verify that a fastening member does not loosen) is performed for the fastening member (bolt 150) or a match mark is formed on the nut 52a according to need.

### «Regarding Effects»

The work management server 7 is able to associate the fastening members (bolts 150) with the device 160 which is fastened with the fastening members (bolts 150) through Step S44 and Step S46 in Fig. 5. The device 160 to be attached and a group (all) of the fastening members (bolts 150) which fasten the device 160 to the vehicle body can be associated by this association work.

The above description is that the association between the device and the bolts is performed by writing the device ID and the bolts ID into the IC tags 155 held by the bolts 150. Another association is as follows. By means of writing only the bolt ID into the IC tag 155 of the bolt 150, and referring the device ID and the bolt ID contained in the design drawing information (S20) or the attachment work information (S30) acquired by the work management server 7, the fastening members (bolts 150) and the component (device 160) which is attached/detached with the fastening members may be associated each other.

By Step S50 in Fig. 5, the work management server 7 performing the comparison process between the bolt information (serving information) stored in the IC tags 55 of the fastening members served on the serving tray 4 and the design drawing information (S20). Thereby the required number of fastening members (bolts 150) which fasten the device 160 to the vehicle body are accurately served on the work site where the device 160 is fastened to the railway vehicle 100. Consequently, it is possible to suppress an increase of manufacturing-hours due to an erroneous serving of the fastening members (bolts 150). Accordingly, it can be verified that the predetermined fastening members supplied to the attachment work attaching the device 160 to the vehicle body are correctly prepared, and it is possible to provide a high-quality work management device and work management method capable of reducing human-error relating to erroneous selection of fastening members.

Since the work management server 7 executes the comparison and verification process between the attachment work information where the workers actually worked and the design drawing information through Step S80 in Fig. 6, it is possible to verify that the workers perform the accurate work based on the design drawing information, particularly, the device 160 is attached to the vehicle body with the predetermined number of bolts at a predetermined tightening torque. Further, owing to the comparison and verification process, it is possible to suppress an erroneous work where the device 160 is fastened to the underfloor area of the railway vehicle 100 with other bolts in similar shapes or the like which are erroneously mixed at the work site. Accordingly, it is possible to provide a high-quality work management device and work management method capable of reducing human-error because the correct fastening is performed with the correct fastening members.

By Step S100 in Fig. 6, the work management server 7 performs the comparison process between the attachment work information (S70) indicating the actual work performed by the workers and the attachment work instruction information (S30), therefore, the comparison and verification between the work completion time of the actual work contained in the attachment work information and the scheduled work end time contained in the attachment work instruction information are enabled, and the manufacturing process can be grasped in real time (visualization of the work). That is, the work management server 7 can easily grasp a scale of remaining works up to the scheduled work end time, and prompt a manager to take countermeasures according to need.

Since the comparison and verification are performed at each step of the manufacturing processes at a serving step of the fastening member, an attachment work step along the design drawing information (or the work instruction information), and an attachment work step of an actual attachment, the erroneous work at the upstream process can be repaired at the upstream process, therefore, it is possible to provide a high-quality work management device and work management method where an effect of an erroneous work at an upstream process does not influence on works at downstream processes.

In each Step, a PC form (a work history record of the attachment work process) can be easily output by selectively outputting data collected by the work management server 7, or the data can be provided to a part of labor-management of workers by tracing the IDs of the workers. Further, the data can be provided to a part of inventory-management based on the serving information.

Though Example 1 describes the work example where the component (device 160) is attached to the underfloor area of a vehicle outside of the railway vehicle 100, but the work example is not limited to the attachment work (method) attaching the component (device) to the vehicle outside of the railway vehicle 100 (an outside of a railway vehicle body structure). The present invention may be applied to an attachment work and a method attaching a component (device) which is provided at a vehicle inside of the railway vehicle 100 (an inside of the railway vehicle body structure). Further, the present invention may be applied to a work management device and a work management method not of the railway vehicle 100 but of transport including a rail vehicle which goes round along a laid down track (for example, a monorail vehicle), shipping, aircraft, and so on.

Table 1 illustrates a content list example of the design drawing information (design drawings, S20), the work instruction information (work instructions, S30), the serving information (S60), the attachment work information (S90) , which are collected by the work management server 7 in the attachment work (manufacturing work) of the device illustrated in Fig. 5 and Fig. 6.

Example of data list referred to by flowcharts illustrated in Fig. 5 and Fig. 6

**[Table 1]**

| No. | INFORMATION | ITEM | CONTENTS |
|---|---|---|---|
| 1 | DESIGN DRAWING INFORMATION (DESIGN DRAWING) S20 | DRAWING NUMBER | ○○○-△□○△△ |
| 2 | | DRAWING NAME | DEVICE ATTACHMENT |
| 3 | | DEVICE NAME | UNDERFLOOR DEVICE 160 (EXAMPLE) |
| 4 | | DEVICE ID | UNDERFLOOR DEVICE 160 |
| 5 | | BOLT SIZE | M16 (EXAMPLE) |
| 6 | | BOLT LENGTH UNDER HEAD | 60 mm (EXAMPLE) |
| 7 | | BOLT MATERIAL | STAINLESS (EXAMPLE) |
| 8 | | BOLT ID | 150a, 150b, ~, 150k, 150l (EXAMPLE) |
| 9 | | TIGHTENING TORQUE | 106 (N·m) (EXAMPLE) |
| 10 | | NUMBER OF BOLTS | 16 (EXAMPLE) |
| 11 | WORK INSTRUCTION INFORMATION (WORK INSTRUCTION) | WORK NAME | DEVICE ATTACHMENT WORK |
| 12 | | WORK DATE | Z/Y/20XX |
| 13 | | VEHICLE INFORMATION | VEHICLE MODEL AA, BB-FORMATION, VEHICLE NUMBER C |
| 14 | | WORK SITE | MANUFACTURING DEPARTMENT, BUILDING A, PLATFORM 2 (EXAMPLE) |
| 15 | | SCHEDULED WORK START TIME | aa:bb:cc |
| 16 | | DEVICE NAME | UNDERFLOOR DEVICE 160 (EXAMPLE) |
| 17 | | (DEVICE ID) | (UNDERFLOOR DEVICE 160) |
| 18 | | (BOLT ID) | (150a, 150b, ~, 150k, 1501 (EXAMPLE)) |
| 19 | | SCHEDULED WORK COMPLETION TIME | dd: ee: ff |
| 20 | SERVING INFORMATION S60 | WORK NAME | SERVING WORK OF DEVICE ATTACHMENT FASTENING MEMBER |
| 21 | | WORK DATE | Z/Y/20XX |
| 22 | | WORKER ID | abcd_efg |
| 23 | | BOLT ID | 150a, 150b, ~, 150k, 1501 (EXAMPLE) |
| 24 | | BOLT SIZE | M16 (EXAMPLE) |
| 25 | | BOLT LENGTH UNDER HEAD | 60 mm (EXAMPLE) |
| 26 | | BOLT MATERIAL | STAINLESS (EXAMPLE) |
| 27 | | TIGHTENING TORQUE | 106 (N·m) (EXAMPLE) |
| 28 | | NUMBER OF BOLTS | 16 (EXAMPLE) |
| 29 | ATTACHMENT WORK INFORMATION S90 | WORK NAME | DEVICE ATTACHMENT WORK |
| 30 | | WORK DATE AND TIME | Z/Y/20XX |
| 31 | | WORKER ID | hijk_lmn |
| 32 | | WORK START TIME | gg:hh:ii |
| 33 | | UNDERFLOOR DEVICE ID | UNDERFLOOR DEVICE 160, SERIAL NUMBER |
| 34 | | BOLT ID | 150a, 150b, ~, 150k, 150l (EXAMPLE) |
| 35 | | WORK COMPLETION TIME | 150a ∼ 150l, jj:kk:ll LATEST TIME AMONG (× 16 PLACES) |

### [Example 2]

In Example 2, an explanation common to the items explained in Example 1 is not given, and a configuration, items, and the like which require new explanation will be focused to be explained. Fig. 7 is a partial cross-sectional view intersecting with a longitudinal direction of the railway vehicle 100 including the device to be attached to the underfloor area and side covers covering lateral sides of the device. Both the device 170 and side covers 122d (124c) covering the device 170 are components attached to the vehicle body. In Example 2, the work management device and the work management method are explained while citing maintenance work of the device equipped to the railway vehicle 100 as an example.

The device 170 as an example of a component includes filter boxes 178 (179), in which filters or the like requiring periodical maintenance are accommodated, at both side surfaces in the width direction Y, and these filter boxes 178 (179) are fixed to the device 170 with bolts 158a to 158 d (159a to 159d) each accommodating an IC tag (first IC tag) (hereinafter, they are denoted as bolts 158 (159) when there is no need to particularly distinguish the bolts). The filter boxes 178 (179) have component identifiers 176 (177) each accommodating an IC tag (second IC tag) storing data of attributes (a design drawing number, a component name, a manufactured date, a serial number, a previous maintenance date and time, and so on) of maintenance components.

Since a shape of each of the component identifiers 176 (177) is an approximately hexagonal prism shape similar to the bolts 158 (159), the tool 5 which tightens and loosens the bolts 158 (159) is available to read/write (get access to) IC tag information accommodated in the bolts 158 (159) through read/write functions provide with the tool 5.

The side covers 122d (124c) or the like are equipped at both ends in the width direction Y of the underframe 110 where the device 170 is fixed, the side covers 122d (124c) being protecting the device 170 and rectifying air flow around the railway vehicle 100 at a travel time to reduce a travel resistance. An upper-end part provided at one end part in the width direction Y of the side cover 122d is fixed to the upper metal fittings 132 with bolts 156a to 156c (each with an IC tag) and the like, and similarly, the side cover 122d is fixed to the lower metal fitting 134 with bolts 156d to 156f(each with an IC tag) and the like. The bolt 156a and the like (hereinafter, it is denoted as the bolts 156 when there is no need to particularly distinguish the bolts) accommodates the IC tag capable of reading/writing information such as the bolt size, the bolt material, the bolt tightening torque, and the ID.

An upper-end part of the side cover 124c provided at the other end part in the width direction Y of the underframe 110 is locked to locking parts 133a of the upper metal fittings 133. The locking part 133a is a column-shaped member which has an axis along the longitudinal direction X. The upper-end part of the side cover 124c is hooked on the locking part 133a, and the side cover 124c is pivotable in a plane of the width direction Y and the height direction Z around the axis of locking part 133a.

A lower-end part of the side cover 124c is equipped with mechanical switches 154a to 154c (hereinafter, they are denoted as the mechanical switches 154 when there is no need to particularly distinguish each). Each mechanical switch 154 is equipped with a key block which turns around an axis along the width direction Y, and a hook which turns integrally with the key block to catch the lower metal fitting 135. A keyhole is provided at the key block equipped to the mechanical switch 154, and a detachable handle equipped with a key part fitting to the keyhole is turned, resulting in that the key block turns and the hook catches the lower metal fitting 135 to thereby fasten (fix) the side cover 124c to the lower metal fitting 135.

Though it is not described in detail, the handle is able to determine whether the mechanical switch 54a or the like locks (fastens) or opens (loosens) the side cover 124c by reading information in an IC tag provided at the side cover 124c (a status display panel 126 or the like displaying an open/close state) when the mechanical switch 154 turns from a closed position to an open position (or in a reverse direction).

The handle is further able to transmit the read IC tag information to the work management server 7 through the transmitting / receiving terminal 6 and the communication network 8. The ID information indicating the open/close state of the side cover 124c may be read by a reader accommodated in the handle or by another reader.

Fig. 8 is a schematic view illustrating a disposing state of side covers 124a to 124e provided at a lower side on both end parts in the width direction of the underframe forming the railway vehicle 100. When a front side is seen from a rear side, side covers 122a to 122f are provided at a second position to a fourth position side located on a left side, and the side covers 124a to 124e are provided at a first position to a third position side located on a right side. When individuals are not particularly distinguished, they are denoted as the side covers 122 or the side covers 124.

Since a size of each side cover 122 (124) is determined depending on size or the like of devices covered by each side cover 122 (124), the size of each side cover 122 (124) provided on the left side is not necessarily the same as the size of each side cover 122 (124) provided on the right side. In general, the side covers 122 (124) are not provided at a side surface of a cart because the cart is inspected or the cart swings when the cart passes through a curve.

A means to fix the side covers 122 (124) to a lower part of the railway vehicle 100 is different depending on a maintenance interval or the like of devices covered by the side covers 122 (124). For example, a side cover which covers a device such as an air conditioner equipped with an air-conditioning filter requiring maintenance at a relatively short interval is fixed to the railway vehicle 100 with the mechanical switches 154 (refer to Fig. 7, Fig. 10) so that the filter can be easily replaced. Meanwhile, a side cover which covers a storage battery box or the like not requiring regular maintenance is fixed to the railway vehicle 100 with the bolts 56 or the like (Fig. 7, Fig. 9). the storage battery box is equipped with batteries.

Fig. 9 is a front view of the side cover 122c which is fastened to the vehicle body with bolts (a view from the line A-A of Fig. 7). An upper edge of the side cover 122c is discretely fixed to the upper metal fittings 133 provided at the railway vehicle 100 with the bolts 156a (156b, 156c) along the longitudinal direction X, and a lower edge of the side cover 122c is discretely fixed to the lower metal fitting 134 provided at the railway vehicle 100 with the bolts 156d (156e, 156f).

A component identifier 137 storing an ID of the side cover 122c is provided at one end part of the lower edge of the side cover 122c fixed with the bolts. A shape of the component identifier 137 is set to approximately the same shape as a top part (an approximately hexagonal prism portion) of each bolt 156 or the like which fixes the side cover 122 to the vehicle body. This configuration enables that the tool 5 tightening each bolt 156 or the like to read/write an IC tag (first IC tag) held by the component identifier 137, resulting in that the man-hour or the like to prepare another tool equipped with a reader/writer function can be reduced.

Fig. 10 is a front view of the side cover which is fastened to the vehicle body with the mechanical switches (a view from the line B-B of Fig. 7). The upper-end part of the side cover 124c is locked to the locking parts 133a of the upper metal fittings 133 discretely provided along the longitudinal direction X at an end part in the width direction Y of the underframe 110, and the mechanical switches 154a (154b, 154c, hereinafter, they are denoted as the mechanical switches 154 when there is no need to particularly distinguish) discretely provided at the lower-end part of the side cover 124c along the longitudinal direction X catch the lower metal fitting 135 to fix the side cover 124c to the railway vehicle 100. There is a case when a status display panel (nameplate) is provided so as to visually recognize open/close states of the mechanical switches 154.

Fig. 11 and Fig. 12 are flowcharts illustrating an example of a maintenance work process of the devices provided at the underfloor area of the railway vehicle. The railway vehicle 100 enters a vehicle factory regularly or when any trouble or the like occurs at the devices and so on, to check soundness of the devices 170, replace the devices 170 according to need, or replace the filter boxes attached to the devices 170. The filter boxes 178 (179) as an example require regular repair (cleaning, replacement).

Without detaching the devices 170 fixed to the railway vehicle 100 from the railway vehicle 100, the side covers 122d (124c) covering the devices 170 from both sides in the width direction Y are detached, and this maintenance work cleaning the filter boxes 178 (179) provided at both side surfaces of the device 170 is performed. Operations of the work management system of the maintenance work and effects thereof will be explained for each step (S) forming this maintenance work as follows.

In this maintenance work, the bolts 156 or the like fixing the side cover 122d to the vehicle body and the bolts 158 (159) fixing the filter boxes 178 (179) are once detached, and then attached again without replacing these bolts with new bolts.

The railway vehicle 100 enters a predetermined maintenance site (for example, platform 18 of a vehicle factory A). The stopped railway vehicle 100 is subjected to various protection operations (for example, a current collector is lowered, an emergency grounding system is input, and so on), wheel stoppers which suppress wheel rolling on a rail are set at back and forth of a wheel, and a display of movement prohibition is put up on the platform 18 or the railway vehicle 100.

In Step S12, the maintenance work is started. In Step S22, the work management server 7 acquires maintenance work information (a work name, a scheduled work date, vehicle information, a work site, a scheduled work start time, a component (device) name, a handled side cover ID, a side cover bolt ID, a scheduled work end time (movement prohibition release time) and the like) recorded in a maintenance work plan stored in the work information server 3 through the communication network 8.

### <<Association between side covers (filter boxes) and bolts fastening them>>

The work management server 7 associates (groups) the side cover 122d and the bolts 156 or the like based on the read maintenance work plan information, and recognizes that the side cover 122d is fixed to the vehicle body with six pieces of bolts 156 or the like. Similarly, the work management server 7 associates (groups) the filter boxes 178 (179) and the bolts 158 (159), and recognizes that the filter boxes 178 (179) are fixed to the device 170 with four pieces of bolts 158 (159).

### «Detachment work of side cover 122d»

In Step S32, the work management server 7 acquires worker ID information, various ID information regarding the side covers 122d (124c) and the filter boxes 178 (179), bolt ID information, and so on (acquisition of detachment work information).

The workers acquire each worker ID from an IC tag belonging to an armband or the like of each worker with the tool 5 or another IC tag reader (a reader or the like, not illustrated). The worker ID information read by the tool 5 or the like is transmitted to the work management server 7 through the transmitting / receiving terminal 6 provided at the maintenance work site and the communication network 8.

The workers acquire side cover ID information of the side cover 122d by touching the component identifier 137 of the side cover 122d which is to be detached with the tool 5. Subsequently, the workers loosen and detach the six pieces of bolts 156 (each with the IC tag) fixing the side cover 122d to the railway vehicle 100 with the tool 5, and put them in a predetermined bolt storage box or the like. The detached side cover 122d and the bolt storage box are temporarily stored at a predetermined place.

Each bolt 156 or the like previously accommodates the IC tag storing bolt information such as a bolt ID, a bolt size, a bolt length under head, bolt material, a tightening torque, and so on at a top part (an approximately hexagonal prism portion) of the bolt. The tool 5 reads the bolt ID and so on from IC tag information accommodated in the loosened bolt 156 or the like during a process loosening the bolts 156 or the like, and transmits to the work management server 7 together with information that the bolt 156 or the like is loosened.

In Step 22, when the side cover 122d and the six pieces of bolts 156 or the like which fix the side cover 122d to the vehicle body cannot be associated, they may be associated (grouped) when the tool 5 reads the ID information of the component identifier 137 of the side cover 122d and the ID information of the bolts 156 at the detachment work time of the side cover 122d from the vehicle body.

In Step S32, the work management server 7 recognizes a time when a first bolt among the associated six pieces of bolts 156 or the like is loosened as a maintenance work start time, and a time when a last bolt is loosened as a time when the side cover 122d is detached from the vehicle body.

### <<Detachment work of filter box 178 (maintenance component)>>

The workers acquire the ID information from the IC tag of the component identifier 176 of the filter box 178 with the tool 5. After the four pieces of bolts 158 (159) fixing the filter box 178 to the device 170 are loosened and detached with the tool 5, the workers put them in a predetermined bolt storage box or the like.

Each bolt 158 (159) or the like previously accommodates the IC tag storing bolt information at a top part (an approximately hexagonal prism portion) of the bolt. The tool 5 reads the IC tag information accommodated in each bolt 158 (159) together with the information that the bolt 158 (159) is loosened during a process loosening (tightening) the bolt 158 (159).

During the above work, the tool 5 transmits the ID information of the filter box 178, the bolt information of each bolt 158 (159), a time when each bolt 158 (159) is loosened, and so on to the work management server 7 through the transmitting / receiving terminal 6 provided at the maintenance work site and the communication network 8. The work management server 7 recognizes a time when the bolt is firstly loosened among the four pieces of bolts 158 (159) fixing the filter box 178 to the device 170 as a detachment work start time of the filter box 178, and a loosened time of the bolt 158 (159) which is lastly loosened among the bolts 158 (159) as a detachment work completion time of the filter box 178.

### <<Detachment work of side cover 124c>>

The worker touches a component identifier 138 of the side cover 124c to be detached with the tool 5 (or the handle operating the mechanical switch 154a or the like) to acquire side cover ID information of the side cover 124c. Subsequently, the worker inserts the handle into the key block held by the mechanical switch 154a or the like and turn the handle from close to open. After the worker releases the lock at the upper-end part of the side cover 124c locked to the upper fittings 133, the side cover 124c is temporarily stored at a predetermined place.

When the mechanical switch 154a or the like is opened from close to open with the handle, IC tag information held by the side cover 124c (the status display panel 126 or the like where the open/close state is displayed) is read, and the side cover ID information of the side cover 124c and information such as a time when the mechanical switch 154a or the like is opened are transmitted to the work management server 7 through the transmitting / receiving terminal 6 provided at the maintenance work site and the communication network 8. The work management server 7 recognizes an opened time of the mechanical switch 154a or the like which is opened the earliest (firstly) among the mechanical switches 154a or the like as a detachment work start time of the side cover 124c, and an opened time of the mechanical switch 154a or the like which is lastly opened among the mechanical switches 154a or the like as a detachment work completion time of the side cover 124c.

### <<Detachment work of filter box 179 (maintenance component)>>

The worker acquires ID information (a filter box ID, a time history or the like when the filter was repaired before) of the filter box from the IC tag of the component identifier 177 of the filter box 179 with the tool 5. After the four pieces of bolts 159 or the like fixing the filter box 179 to the device 170 arc loosened and detached with the tool 5, the bolts are put in a predetermined bolt storage box or the like.

Each bolt 159 or the like previously accommodates the 1C tag storing bolt information at a top part (an approximately hexagonal prism portion) of the bolt. The tool 5 reads the IC tag information accommodated in each bolt 159 or the like together with information that the bolt 159 or the like is loosened during a process loosening the bolt 159 or the like. The tool 5 transmits the ID information of the filter box 179 and the bolt ID information such as a time when each bolt 159 or the like is loosened to the work management server 7 through the communication network 8.

The work management server 7 recognizes a time when the bolt is firstly loosened among the four pieces of bolts 159 or the like fixing the filter box 179 to the device 170 as a detachment work start time of the filter box 179, and a loosened time of the bolt 159 or the like which is lastly loosened among the bolts 159 or the like as a detachment work completion time of the filter box 179.

In Step S42, the work management server 7 compares and verifies the maintenance work plan information (the side cover ID, the side cover bolt ID, the filter box ID, the filter box bolt ID) read in S22 and the detachment work information (the side cover ID, the side cover bolt ID, the filter box ID, the filter box bolt ID) read in S32. In Step S42, when this information are not consistent, for example, when one bolt among six pieces of bolts is not tightened at a predetermined torque where the six pieces of bolts are used for fixing under normal circumstances, the work management server 7 displays messages including a torque shortage, a fastening work incompletion, the bolt ID, and so on on the monitor 7A, and requests the workers to check the fastening work and to do an additional work, to redo the detachment work.

In Step 43, when the detachment work start time (for example, a time when the bolt 156 or the like is firstly loosened among the bolts 156 or the like fixing the side cover 122d to the vehicle body) contained in the detachment work information (S32) is later than a scheduled maintenance work start time recorded in the maintenance work plan information (S22), the work management server 7 displays a start of work on the monitor 7A or the like in S45 to prompt a manager or the like of the workers to start the work, and the prompted manager or the like plans and takes countermeasures (request for increasing the number of workers or the like) in S47.

Similarly, when the detachment work completion time (for example, the detachment work completion time of the filter box 179 which is lastly detached) contained in the detachment work information (S32) is later or estimated to be later than the scheduled detachment work end time contained in the maintenance work plan information (S22), the work management server 7 displays the start of work on the monitor 7A or the like in S45 to notify the manager or the like of the workers of a delay of the detachment work completion, and the manager or the like who is notified of the delay plans and takes countermeasures (request for increasing the number of workers or the like) in S47.

In Step S52, the work management server 7 acquires the worker ID information who is engaged in the detachment work, the bolt ID information, the ID information and the like regarding each of the side covers 122d (124c) and the filter boxes 178 (179).

### <<Attachment work of filter boxes 178 (179) (maintenance component)>>

After filter parts (not illustrated) of the filter boxes 178 (179) are cleaned by blowing high-pressure air or replaced, the filter boxes 178 (179) are fixed to predetermined places of the device 170 again. Since a reattachment work of the filter box 178 to the device 170 is the same as a reattachment work of the filter box 179 to the device 170, an explanation of the attachment work of the filter box 179 is not given.

The worker touches the IC tag of the component identifier 176 of the filter box 178 with the tool 5, and transmits the ID information of the filter box 178 to the work management server 7 through the communication network 8.

Four pieces of bolts 158 which had fixed the filter box 178 are taken out of the bolt storage box, the worker fixes the filter box 178 to the device 170 by using the four pieces of bolts 158. During the above work, the tool 5 writes the bolt ID information such as the information where the bolt 158 is tightened at a predetermined torque and the tightened time to the bolt 158 or the like, and transmits them to the work management server 7 through the transmitting / receiving terminal 6 provided at the maintenance work site and the communication network 8. The work management server 7 recognizes a time when the bolt is lastly fastened among the bolts 158 fixing the filter box 178 to the device 170 as an attachment work start time of the filter box 178, and recognizes a fastened time of the bolt 158 or the like which is lastly fastened among the bolts 158 or the like as an attachment work completion time of the filter box 178.

Since the filter box 178 and the four pieces of bolts 158 are associated, the work management server 7 is able to recognize that the filter box 178 is correctly fixed to the device 170 by using the predetermined four pieces of bolts 158. For example, there is no problem if the bolt 158 which was inserted into a bolt hole at an upper right corner of the filter box 178 before the filter box 178 is detached is inserted into a bolt hole at a lower left corner of the filter box 178 when the filter box 178 is reattached because the association is established, and it can be verified that the filter box 178 is accurately reattached to the device 170 by using the predetermined (associated) four pieces of bolts 158.

If the above-stated association is not established, the bolt 158 is necessary to be associated with each bolt hole in which the bolt 158 is inserted, resulting in that complicated work management and work order instruction for the workers become necessary such that the once detached bolt should be inserted into the same bolt hole again and an attaching order of the bolts (for example, the bolt 158a is to be firstly attached, and the bolt 158d is to be lastly attached) should be specified, or the like. The component (the filter box, the side cover, and so on) and the bolts or the like fixing the component are associated, resulting in that complicated management such as the correspondence between the bolts and the bolt holes, and the specification of the attaching order of the bolts can be omitted, and the work management server 7 is able to grasp the information (an attachment work completion time, and the like) where a component is attached to a predetermined place with predetermined fastening members.

### <<Attachment work of side cover 122d>>

The worker carries out the side cover 122d from a temporary storage site, and locates the side cover 122d at a predetermined place of the railway vehicle 100. The worker touches the IC tag of the component identifier 137 of the side cover 122d with the tool 5, and transmits the ID information of the side cover 122d to the work management server 7 through the communication network 8.

The worker takes out the six pieces of bolts 56 which had fixed the side cover 122d to the vehicle body from the bolt storage box, and fixes the side cover 122d to the vehicle body with the tool 5. During the work, the tool 5 writes the bolt ID information such as the information where the bolt 156 or the like is tightened at a predetermined torque and a tightened time to each bolt 156 or the like, and transmits them to the work management server 7 through the transmitting / receiving terminal 6 provided at the maintenance work site and the communication network 8.

Since the side cover 122d and the six pieces of bolts 156 or the like fixing the side cover 122d to the vehicle body are associated, the work management server 7 recognizes a fastened time of the bolt 156 which is lastly fastened among the six pieces of bolts 156 or the like as completion of a reattachment work of the side cover 122d, where the fastened time of the bolt 156 is assumed as reattachment time of the side cover 122d to the vehicle body.

The work management server 7 recognizes a time when the first bolt is fastened among the associated six pieces of bolts 156 or the like as the attachment work start time, and recognizes a time when the last bolt is fastened among the six pieces of bolts 156 as a time when the side cover 122d is attached to the vehicle body.

### <<Attachment work of side cover 124c>>

The worker carries out the side cover 124c from the temporary storage site, and locates the side cover 124c by locking the upper-end part at a predetermined place of the railway vehicle 100.

The worker touches the component identifier 138 of the side cover 124c to be fixed to the railway vehicle 100 with the tool 5 (or the handle operating the mechanical switch 154a or the like), and transmits the ID information of the side cover 1 24c from an IC tag of the component identifier 138 of the side cover 124c to the work management server 7 through the communication network 8.

The worker inserts the handle into the key block provided at the mechanical switch 154 or the like and turns the handle from open to close to fix the side cover 124c to the vehicle body. When the mechanical switch 154 or the like is turned from open to close with the handle, the IC tag information held by the side cover 124c (the status display panel 126 or the like where the open/close state is displayed) is read, and the side cover ID information of the side cover 124c and the information such as a time when the mechanical switch 154 or the like is fastened are transmitted to the work management server 7 through the transmitting / receiving terminal 6 provided at the maintenance work site and the communication network 8.

Since the side cover 124c and the mechanical switches 154 or the like are also associated, the worker is able to perform the fastening work without paying attention to a fastening order of the three pieces of mechanical switches 154 or the like. The work management server 7 recognizes a time when the mechanical switch 154 or the like is firstly closed among the three pieces of mechanical switches 154 or the like as an attachment work start time of the side cover 124c to the vehicle body, and recognizes a time when the mechanical switch 154 or the like which is lastly closed among the three pieces of mechanical switches 154 or the like as an attachment work completion time of the side cover 124c to the vehicle body.

In Step S72, the work management server 7 compares and verifies the maintenance work plan information (the side cover ID, the side cover bolt ID, the filter box ID, the filter box bolt ID) read in S22 and the attachment work information (the side cover ID, the side cover bolt ID, the filter box ID, the filter box bolt ID) read in S52.

In Step S72, when this information are not consistent, for example, when one bolt among six pieces of bolts fixing the side cover is not tightened at a predetermined torque, the work management server 7 displays messages including a torque shortage, a fastening work incompletion, the bolt ID, and so on on the monitor 7A, and requests the worker (the manager or the like) to check the fastening work and to do an additional work.

In Step S73, when the attachment work start time contained in the attachment work information (S52) is later than the maintenance work plan information (S22), the work management server 7 displays work delay information on the monitor in S75 to notify the manager or the like of the delay of the work, and the notified manager or the like plans and takes countermeasures (request for increasing the number of workers or the like) in S77.

When the attachment work completion time (for example, the attachment work completion time of the side cover 124c which is lastly closed) contained in the attachment work information (S52) is later than or estimated to be later than the scheduled attachment work end time contained in the maintenance work plan information (S22), the information of the delay of the work is displayed on the monitor in S75 to notify the manager or the like of the delay (possibility) of the work, and the notified manager or the like plans and takes countermeasures (request for increasing the number of workers or the like) in S77. When there is particularly no problem in Step S73, the maintenance work of the device 170 is completed (S82).

### <<Regarding effects>>

According to S42, it can be checked that the predetermined side covers (122d, 124c) and maintenance components (178, 179) are correctly detached at a detachment work stage constituting the maintenance work. It is therefore possible to provide a high-quality work management device and work management method capable of eliminating a possibility where an incorrect component is handled due to a human error of a worker in the detachment work of the maintenance work.

According to S43, it can be checked that the detachment works of the predetermined side covers (122d, 124c) and maintenance components (178, 179) are started and completed until predetermined times in the detachment work stage constituting the maintenance work. Further, when the detachment work of the side cover or the maintenance component is delayed (including a case when the delay is estimated), it is possible to alert and prompt the manager or the like to plan countermeasures, therefore, it is possible to provide a high-quality work management device and work management method capable of managing (visualization of the process) each process of the maintenance work in real time.

According to S72, it can be checked that the predetermined side covers (122d, 124c) and maintenance components (178, 179) are correctly selected and correctly attached to predetermined places at the attachment work stage constituting the maintenance work. Further, it can be checked that the bolts or the like fixing the side covers and the maintenance components are fastened with the predetermined number of bolts and at the predetermined tightening torques.

Accordingly, it is possible to provide a high-quality work management device and work management method capable of eliminating the possibility of handling incorrect components and human errors such as forgetting to insert the bolt or the like, forgetting to fasten the bolt, and the bolt not tightened at the predetermined tightening torque in the attachment work of the maintenance work.

Owing to a tablet terminal or a monitor capable of displaying the result of S72, an inspector checking the completion of the maintenance work is able to perform an inspection with a hammer to check fastening states by hitting the bolts or the like with an inspection hummer when the maintenance work is completed, or to form a match mark by which loosening of the bolt is easily visually recognized for the bolt to which the inspection with a hammer is completed.

According to S73, it can be checked that the attachment works of the predetermined side covers (122d, 124c) and maintenance components (178, 179) are started and completed until the predetermined time at the attachment work stage constituting the maintenance work.

Further, it is possible to alert to the manager and to prompt the manager to plan countermeasures when the attachment works of the side covers and the maintenance components arc delayed (including a case when the delay is estimated), therefore, it is possible to provide a high-quality work management device and work management method capable of managing the maintenance work process in real time.

In each step, the data collected by the work management server 7 is selected and compared to be verified, resulting in that it is possible to easily grasp a progress state of the maintenance work, or to provide the data to a part of labor-management of the workers by tracing the ID of the worker.

Further in each step, the data collected by the work management server 7 is selected and compared to be verified, resulting in that it is possible to easily output check sheets to check the works in each step such as the attachment and the detachment of the maintenance components.

The work management system and the work management method according to the
invention can be further applied to a field test or the like using the railway vehicle 100. Concretely, in the field test where after the side covers or the like of the vehicle body are once detached, an accelerometer, a noise meter, and the like are temporarily provided at the underfloor area of the railway vehicle 100, and the side covers or the like are attached again, the work management server 7 reads various data (a vehicle series, a vehicle number, a side cover ID, a bolt ID, and so on) described in a test outline (plan) instead of the maintenance work plan, and compares and verifies with actual attachment/detachment information of the side covers or the like.

It is thereby possible to verify presence/absence of work errors due to human errors or the like such as forgetting to insert the bolt, the bolt not fastened at a predetermined tightening torque when the once detached side cover is attached to the vehicle body again, and to easily output check sheets to check a status of a temporary work in accordance with a running test and a status of a restoration work to restore from the temporary state to a current state. Accordingly, it is possible to provide the work management device and work management method relating to the field test to further increase safety because the safety can be managed.

Further, information (history of the time when the fastening members (bolts or the like) are each tightened at a predetermined torque, and the time when the fastening members arc loosened, and the like) of the fastening members from the manufacturing time to the maintenance time of the railway vehicle 100 is transmitted to the work management server 7 through the communication network 8, resulting in that the work management server 7 can easily grasp the number of stresses (the number of times of tightening/loosening the fastening member) received by each fastening member.

Since the work management server 7 is able to output a time for replacement of each fastening member (bolt or the like) based on history information such as the stress received by this fastening member, it is possible to provide the work management device and work management method capable of preventing troubles due to attaching the components such as the device and the side covers with a fastening member where fatigue is accumulated and replacement is necessary. If the history information such as the stress received by the fastening member is written to the IC tag held by the fastening member at any time, it is possible to immediately grasp whether the fastening member requires the replacement at the time when the tool 5 handles the fastening member.

The maintenance work explained in Example 2 is an example where the bolts 156 or the like fixing the side cover 122d to the vehicle body, and the bolts 158 (159) fixing the filter boxes 178 (179) are once detached, and attached them again without replacing these bolts with new bolts. When the once detached fastening members (the bolts 156 or the like, the bolts 158 (159) or the like) are discarded to be replaced with new bolts, the aforementioned effect can be obtained by, for example, continuing the maintenance work after associating the attached/detached component and the fastening members accommodating the IC tags fixing the attached/detached component by using the serving tray 4 explained in Fig. 4.

Table 2 illustrates a content list of the maintenance work plan information (S22), the detachment work information (S32), and the attachment work information (S52) collected by the work management server 7 in the maintenance work (detachment/attachment work) of the device (component) illustrated in Fig. 11 and Fig. 12.

Example of data list referred to by flowcharts illustrated in Fig. 11 and Fig. 12

**[Table 2]**

| No. | INFORMATION | ITEM | CONTENTS |
|---|---|---|---|
| 1 | MAINTENANCE WORK PLAN (MAINTENANCE WORK PLAN SHEET) S22 | WORK NAME | REGULAR MAINTENANCE WORK OF DEVICE 170 (CLEANING OF FILTER BOX) |
| 2 | | SCHEDULED WORK DATE | Z/Y/20XX |
| 3 | | VEHICLE INFORMATION | VEHICLE SERIES AA, FORMATION BB, VEHICLE NUMBER C |
| 4 | | WORK SITE | PLATFORM 18 OF ROLLING STOCK DEPOT A |
| 5 | | SCHEDULED WORK START TIME | aa:bb:cc |
| 6 | | DEVICE NAME | DEVICE 170 |
| 7 | | SIDE COVER ID | 122d, 124c |
| 8 | | SIDE COVER BOLT ID | 156a ~ 156f |
| 9 | | MAINTENANCE COMPONENT ID | FILTER BOX (178, 179) |
| 10 | | MAINTENANCE COMPONENT BOLT ID | 158a ∼ 158d, 159a ~159d |
| 11 | | SCHEDULED WORK COMPLETION TIME (MOVEMENT PROHIBITION RELEASE TIME) | dd:ee:ff |
| 12 | DETACHMENT WORK INFORMATION | WORKER ID | opqr stu |
| 13 | | DETACHMENT WORK START TIME | gh:ij:kl |
| 14 | | SIDE COVER ID | 122d |
| 15 | | SIDE COVER BOLT ID, BOLT LOOSENED TIME | 156a ~ 156d, gg:hh:ii (× 6 PLACES) |
| 16 | | DETACHMENT WORK START TIME | 156a ~ 156d, gg:hh:ii EARLIEST TIME AMONG (× 6 PLACES) |
| 17 | | MAINTENANCE COMPONENT ID | 178 |
| 18 | | FILTER BOX BOLT ID, BOLT LOOSENED TIME | 158a ~ 158d, jj:kk:ii (× 4 PLACES) |
| 19 | | SIDE COVER ID | 124c |
| 20 | | MECHANICAL SWITCH OPEN INFORMATION (TIME) | 154a ~ 154c, mm:oo:pp (× 3 PLACES) |
| 21 | | MAINTENANCE COMPONENT ID | 179 |
| 22 | | FILTER BOX BOLT ID, BOLT LOOSENED TIME | 159a ~ 159d, qq:rr:ss (× 4 PLACES) |
| 23 | ATTACHMENT WORK INFORMATION S52 | WORKER ID | opqr_stu |
| 24 | | MAINTENANCE COMPONENT ID | 178 |
| 25 | | FILTER BOX BOLT ID, BOLT FASTENED TIME | 158a ~ 158d, tt:uu:vv (× 4 PLACES) |
| 26 | | SIDE COVER ID | 122d |
| 27 | | SIDE COVER BOLT ID, BOLT FASTENED TIME | 156a ~ 156f, xx:yy:zz (× 6 PLACES) |
| 28 | | MAINTENANCE COMPONENT ID | 179 |
| 29 | | FILTER BOX BOLT ID, BOLT FASTENED TIME | 159a, ∼ 159d, ab:cd:ef (× 4 PLACES) |
| 30 | | SIDE COVER ID | 124c |
| 31 | | MECHANICAL SWITCH CLOSED INFORMATION (TIME) | 154a ~ 154c, ac:cd:ef (× 3 PLACES) |
| 32 | | ATTACHMENT WORK COMPLETION TIME | 154a ~ 154c, ab:cd:ef LATEST TIME AMONG (× 3 PLACES) |

Though illustrative embodiments of the present invention are described above, the present
invention is not limited to the above-described embodiments as they are, and various modifications are possible within the scope of the claims. For example, in the above-described Examples, it is constituted such that the design information server 2 and the work information server 3 respectively include the information of the design drawing or the like, the information described in the manufacturing work instruction and the maintenance work instruction of the railway vehicle 100, and the serving information, and the work management server 7 acquires the information from each server, but it may be constituted such that the work management server 7 includes a part or all of these data from the beginning.

### {Reference Signs List}

1: work management system, 2: design information server, 3: work information server, 4: serving tray, 5: tool, 6: transmitting / receiving terminal, 7: work management server (an example of a work management device), 7A: monitor, 8: communication network, 11: information reception part, 12: determination part, 13: comparison part, 14: output part, 15: memory

## Claims

1. A work management (1) system, comprising:
one or a plurality of fastening members (150) having each a first IC tag (155);
a component (178, 179) having a component identifier (137,165, 176, 177) accommodating a second IC tag;
the first IC tag (155) having information based on tightening/loosening information which is information relating to tightening/loosening when the component having second IC tag is tightened or loosened by tightening/loosening the fastening member and information relating to the component;
an information acquisition part (11) which is configured to acquire information indicated by the first IC tag (155);
a determination part (12) which is configured to determine whether first combination information combining information indicated by the first IC tag (155) and acquired by the information acquisition part (11) with information indicated by the second IC tag is correct,
a comparison part (13) which is configured to compare the first combination information with second combination information which is set in advance regarding the attachment/detachment of the component by the fastening member (150), when the information acquisition part (11) acquires the second combination information,
**characterized in that**
the second combination information is based on design information described in a design drawing or work information described in a work instruction,
the tightening/loosening information contains tightened/loosened time information when the one or the plurality of the fastening members are tightened/loosened,
the comparison part (13) is configured to determine the oldest tightened/loosened time information among the tightened/loosened time information as a start time of predetermined work for tightening/loosening the component, and compare the start time of predetermined work with predetermined work start time information which is contained in the work information, and
an output part (14) is configured to output information regarding progress of the predetermined work based on the determination result of the determination part and on the comparison result of the comparison part (13).

2. A work management (1) system, comprising:
one or a plurality of fastening members (150) having each a first IC tag (155);
a component (178, 179) having a component identifier (137,165, 176, 177) accommodating a second IC tag;
the first IC tag (155) having information based on tightening/loosening information which is information relating to tightening/loosening when the component having second IC tag is tightened or loosened by tightening/loosening the fastening member and information relating to the component,
an information acquisition part (11) which is configured to acquire information indicated by the first IC tag (155);
a determination part (12) which is configured to determine whether first combination information combining information indicated by the first IC tag (155) and acquired by the information acquisition part (11) with information indicated by the second IC tag is correct,
a comparison part (13) which is configured to compare the first combination information with second combination information which is set in advance regarding the attachment/detachment of the component by the fastening member (150), when the information acquisition part (11) acquires the second combination information,
**characterized in that**
the second combination information is based on design information described in a design drawing or work information described in a work instruction,
the tightening/loosening information contains tightened/loosened time information when the one or the plurality of the fastening members are tightened/loosened,
the comparison part (13) is configured to determine the newest tightened/loosened time information among the tightened/loosened time information as an end time of predetermined work for tightening/loosening the component, and compare the end time of predetermined work with predetermined work end time information which is contained in the work information, and
an output part (14) is configured to output information regarding progress of the predetermined work based on the determination result of the determination part and on the comparison result of the comparison part (13).

3. The work management system (1) according to claim 1 or 2, wherein the second combination information is based on serving tray information from a serving tray (4), includes:
a recessed part (192) where the fastening member (150) is fitted; a read/write part which is provided at the recessed part (192) and read/write the first IC tag (155); and
a communication part (183, 184) which is connected to the read/write part.

4. A work management method executed by a work management system (1) including:
an information acquisition part (11);
a determination part (12);
an output part (14);
a comparison part (13);
one or a plurality of fastening members (150) having each a first IC tag (155); and
a component (178, 179) having a component identifier (137,165, 176, 177) accommodating a second IC tag;
the work management method comprising:
an information acquisition step of the information acquisition part (11) acquiring tightening/loosening information which is information relating to tightening/loosening when the component having second IC tag is tightened or loosened by tightening/loosening the fastening member and information relating to the component;
a determination step of the determination part determining whether first combination information combining information indicated by the first IC tag (155) and acquired by the information acquisition part (11) with information indicated by the second IC tag is correct, and
a comparison step of the comparison part (13) comparing the first combination information with second combination information which is set in advance regarding the attachment/detachment of the component by the fastening member, when the information acquisition part acquires the second combination information,
an output step of the output part (14) outputting information regarding predetermined work based on a determination result in the determination step and comparing result of the comparison part (13),
**characterized in that**
the second combination information is based on design information described in a design drawing or work information described in a work instruction,
the tightening/loosening information contains tightened/loosened time information when the one or the plurality of the fastening members are tightened/loosened,
the comparison part determines the oldest tightened/loosened time information among the tightened/loosened time information as a start time of predetermined work for tightening/loosening the component, and compares the start time of predetermined work with predetermined work start time information which is contained in the work information, and
the output part (14) outputs information regarding progress of the predetermined work based on the determination result of the determination part and on the comparison result compared by the comparison part.

5. A work management method executed by a work management system (1) including:
an information acquisition part (11);
a determination part (12);
an output part (14);
a comparison part (13;)
one or a plurality of fastening members (150) having each a first IC tag (155); and
a component (178, 179) having a component identifier (137,165, 176, 177) accommodating a second IC tag;
the work management method comprising:
an information acquisition step of the information acquisition part (11) acquiring tightening/loosening information which is information relating to tightening/loosening when the component having second IC tag is tightened or loosened by tightening/loosening the fastening member and information relating to the component;
a determination step of the determination part determining whether first combination information combining information indicated by the first IC tag (155) and acquired by the information acquisition part (11) with information indicated by the second IC tag is correct, and
a comparison step of the comparison part (13) comparing the first combination information with second combination information which is set in advance regarding the attachment/detachment of the component by the fastening members, when the information acquisition part acquires the second combination information,
an output step of the output part (14) outputting information regarding predetermined work based on a determination result in the determination step and comparing result of the comparison part (13),
**characterized in that**
the second combination information is based on design information described in a design drawing or work information described in a work instruction,
the tightening/loosening information contains tightened/loosened time information when the one or the plurality of the fastening members are tightened/loosened,
the comparison part determines the newest tightened/loosened time information among the tightened/loosened time information as an end time of predetermined work, and compares the end time of predetermined work with predetermined work end time information which is contained in the work information, and
the output part outputs information regarding progress of the predetermined work based on the determination result of the determination part and on the comparison result compared by the comparison part.

## Patentansprüche

1. Ein Arbeitsverwaltungssystem (1), das folgende Merkmale aufweist:
ein oder mehrere Befestigungsbauglieder (150), die jeweils ein erstes IC-Etikett (155) aufweisen;
eine Komponente (178, 179) mit einem Komponentenidentifizierer (137, 165, 176, 177), die ein zweites IC-Etikett aufnimmt;
wobei das erste IC-Etikett (155) Informationen aufweist, die auf Anziehen/Lockern-Informationen basieren, welches Informationen, die sich auf das Anziehen/Lockern beziehen, wenn die Komponente, die das zweite IC-Etikett aufweist, durch Anziehen/Lockern des Befestigungsbauglieds angezogen oder gelockert wird, und Informationen sind, die sich auf die Komponente beziehen;
ein Informationsaufnahmeteil (11), das konfiguriert ist, Informationen aufzunehmen, die durch das erste IC-Etikett (155) angezeigt werden;
ein Bestimmungsteil (12), das konfiguriert ist, zu bestimmen, ob erste Kombinationsinformationen, die Informationen, die durch das erste IC-Etikett (155) angezeigt werden und durch das Informationsaufnahmeteil (11) aufgenommen werden, mit Informationen kombinieren, die durch das zweite IC-Etikett angezeigt werden, korrekt sind,
ein Vergleichsteil (13), das konfiguriert ist, die ersten Kombinationsinformationen mit zweiten Kombinationsinformationen zu vergleichen, die im Voraus festgelegt werden bezüglich der Anbringung/Ablösung der Komponente durch das Befestigungsbauglied (150), wenn das Informationsaufnahmeteil (11) die zweiten Kombinationsinformationen aufnimmt,
**dadurch gekennzeichnet, dass**
die zweiten Kombinationsinformationen auf Entwurfsinformationen, die in einer Entwurfszeichnung beschrieben sind, oder Arbeitsinformationen basieren, die in einer Arbeitsanweisung beschrieben sind,
die Anziehen/Lockern-Informationen Angezogen/Gelockert-Zeitinformationen enthalten, wann das eine oder die mehreren der Befestigungsbauglieder angezogen/gelockert werden,
das Vergleichsteil (13) konfiguriert ist, die ältesten Angezogen/Gelockert-Zeitinformationen von den Angezogen/Gelockert-Zeitinformationen als eine Startzeit einer vorbestimmten Arbeit zum Anziehen/Lockern der Komponente zu bestimmen, und die Startzeit der vorbestimmten Arbeit mit vorbestimmten Arbeitsstartzeitinformationen zu vergleichen, die in den Arbeitsinformationen enthalten sind und
ein Ausgabeteil (14) konfiguriert ist, Informationen bezüglich des Fortschritts der vorbestimmten Arbeit basierend auf dem Bestimmungsergebnis des Bestimmungsteils und auf dem Vergleichsergebnis des Vergleichsteils (13) auszugeben.

2. Ein Arbeitsverwaltungssystem (1), das folgende Merkmale aufweist:
ein oder mehrere Befestigungsbauglieder (150), die jeweils ein erstes IC-Etikett (155) aufweisen;
eine Komponente (178, 179) mit einem Komponentenidentifizierer (137, 165, 176, 177), die ein zweites IC-Etikett aufnimmt;
wobei das erste IC-Etikett (155) Informationen aufweist, die auf Anziehen/Lockern-Informationen basieren, welches Informationen, die sich auf das Anziehen/Lockern beziehen, wenn die Komponente, die das zweite IC-Etikett aufweist, durch Anziehen/Lockern des Befestigungsbauglieds angezogen oder gelockert wird, und Informationen sind, die sich auf die Komponente beziehen;
ein Informationsaufnahmeteil (11), das konfiguriert ist, Informationen aufzunehmen, die durch das erste IC-Etikett (155) angezeigt werden;
ein Bestimmungsteil (12), das konfiguriert ist, zu bestimmen, ob erste Kombinationsinformationen, die Informationen, die durch das erste IC-Etikett (155) angezeigt werden und durch das Informationsaufnahmeteil (11) aufgenommen werden, mit Informationen kombinieren, die durch das zweite IC-Etikett angezeigt werden, korrekt sind,
ein Vergleichsteil (13), das konfiguriert ist, die ersten Kombinationsinformationen mit zweiten Kombinationsinformationen zu vergleichen, die im Voraus festgelegt werden bezüglich der Anbringung/Ablösung der Komponente durch das Befestigungsbauglied (150), wenn das Informationsaufnahmeteil (11) die zweiten Kombinationsinformationen aufnimmt,
**dadurch gekennzeichnet, dass**
die zweiten Kombinationsinformationen auf Entwurfsinformationen, die in einer Entwurfszeichnung beschrieben sind, oder Arbeitsinformationen basieren, die in einer Arbeitsanweisung beschrieben sind,
die Anziehen/Lockern-Informationen Angezogen/Gelockert-Zeitinformationen enthalten, wann das eine oder die mehreren der Befestigungsbauglieder angezogen/gelockert werden,
das Vergleichsteil (13) konfiguriert ist, die neuesten Angezogen/Gelockert-Zeitinformationen von den Angezogen/Gelockert-Zeitinformationen als eine Endzeit einer vorbestimmten Arbeit zum Anziehen/Lockern der Komponente zu bestimmen, und die Endzeit der vorbestimmten Arbeit mit vorbestimmten Arbeitsendzeitinformationen zu vergleichen, die in den Arbeitsinformationen enthalten sind und
ein Ausgabeteil (14) konfiguriert ist, Informationen bezüglich des Fortschritts der vorbestimmten Arbeit basierend auf dem Bestimmungsergebnis des Bestimmungsteils und auf dem Vergleichsergebnis des Vergleichsteils (13) auszugeben.

3. Das Arbeitsverwaltungssystem (1) gemäß Anspruch 1 oder 2, bei dem die zweiten Kombinationsinformationen auf Bereitstellungsablageinformationen von einer Bereitstellungsablage (4) basieren, das Folgendes umfasst:
eine ausgenommenes Teil (192), wo das Befestigungsbauglied (150) eingepasst ist;
ein Lese/Schreibteil, das an dem ausgenommenen Teil (192) vorgesehen ist und das erste IC-Etikett (155) liest/schreibt; und
ein Kommunikationsteil (183, 184), das mit dem Lese/Schreibteil verbunden ist.

4. Ein Arbeitsverwaltungsverfahren, das durch ein Arbeitsverwaltungssystem (1) ausgeführt wird, das folgende Merkmale umfasst:
ein Informationsaufnahmeteil (11);
ein Bestimmungsteil (12);
ein Ausgabeteil (14);
ein Vergleichsteil (13);
ein oder mehrere Befestigungsbauglieder (150), die jeweils ein erstes IC-Etikett (155) aufweisen;
eine Komponente (178, 179) mit einem Komponentenidentifizierer (137, 165, 176, 177), die ein zweites IC-Etikett aufnimmt;
wobei das Arbeitsverwaltungsverfahren folgende Schritte aufweist:
einen Informationsaufnahmeschritt des Informationsaufnahmeteils (11), der Anziehen/Lockern-Informationen aufnimmt, welches Informationen, die sich auf das Anziehen/Lockern beziehen, wenn die Komponente, die das zweite IC-Etikett aufweist, durch Anziehen/Lockern des Befestigungsbauglieds angezogen oder gelockert wird, und Informationen sind, die sich auf die Komponente beziehen;
einen Bestimmungsschritt des Bestimmungsteils, der bestimmt, ob erste Kombinationsinformationen, die Informationen, die durch das erste IC-Etikett (155) angezeigt werden und durch das Informationsaufnahmeteil (11) aufgenommen werden, mit Informationen kombinieren, die durch das zweite IC-Etikett angezeigt werden, korrekt sind, und
einen Vergleichsschritt des Vergleichsteils (13), der die ersten Kombinationsinformationen mit zweiten Kombinationsinformationen vergleicht, die im Voraus festgelegt werden bezüglich, der Anbringung/Ablösung der Komponente durch das Befestigungsbauglied (150), wenn das Informationsaufnahmeteil (11) die zweiten Kombinationsinformationen aufnimmt,
einen Ausgabeschritt des Ausgabeteils (14), der Informationen bezüglich vorbestimmter Arbeit basierend auf einem Bestimmungsergebnis des Bestimmungsteils und auf dem Vergleichsergebnis des Vergleichsteils (13) ausgibt,
**dadurch gekennzeichnet, dass**
die zweiten Kombinationsinformationen auf Entwurfsinformationen, die in einer Entwurfszeichnung beschrieben sind, oder Arbeitsinformationen basieren, die in einer Arbeitsanweisung beschrieben sind,
die Anziehen/Lockern-Informationen Angezogen/Gelockert-Zeitinformationen enthalten, wann das eine oder die mehreren der Befestigungsbauglieder angezogen/gelockert werden,
das Vergleichsteil (13) die ältesten Angezogen/Gelockert-Zeitinformationen von den Angezogen/Gelockert-Zeitinformationen als eine Startzeit einer vorbestimmten Arbeit zum Anziehen/Lockern der Komponente bestimmt, und die Startzeit der vorbestimmten Arbeit mit vorbestimmten Arbeitsstartzeitinformationen vergleicht, die in den Arbeitsinformationen enthalten sind und
das Ausgabeteil (14) Informationen bezüglich des Fortschritts der vorbestimmten Arbeit basierend auf dem Bestimmungsergebnis des Bestimmungsteils und auf dem Vergleichsergebnis, das durch das Vergleichsteil (13) verglichen wird, ausgibt.

5. Ein Arbeitsverwaltungsverfahren, das durch ein Arbeitsverwaltungssystem (1) ausgeführt wird, das folgende Merkmale umfasst:
ein Informationsaufnahmeteil (11);
ein Bestimmungsteil (12);
ein Ausgabeteil (14);
ein Vergleichsteil (13);
ein oder mehrere Befestigungsbauglieder (150), die jeweils ein erstes IC-Etikett (155) aufweisen;
eine Komponente (178, 179) mit einem Komponentenidentifizierer (137, 165, 176, 177), die ein zweites IC-Etikett aufnimmt;
wobei das Arbeitsverwaltungsverfahren folgende Schritte aufweist:
einen Informationsaufnahmeschritt des Informationsaufnahmeteils (11), der Anziehen/Lockern-Informationen aufnimmt, welches Informationen, die sich auf das Anziehen/Lockern beziehen, wenn die Komponente, die das zweite IC-Etikett aufweist, durch Anziehen/Lockern des Befestigungsbauglieds angezogen oder gelockert wird, und Informationen sind, die sich auf die Komponente beziehen;
einen Bestimmungsschritt des Bestimmungsteils, der bestimmt, ob erste Kombinationsinformationen, die Informationen, die durch das erste IC-Etikett (155) angezeigt werden und durch das Informationsaufnahmeteil (11) aufgenommen werden, mit Informationen kombinieren, die durch das zweite IC-Etikett angezeigt werden, korrekt sind, und
einen Vergleichsschritt des Vergleichsteils (13), der die ersten Kombinationsinformationen mit zweiten Kombinationsinformationen vergleicht, die im Voraus festgelegt werden bezüglich der Anbringung/Ablösung der Komponente durch das Befestigungsbauglied (150), wenn das Informationsaufnahmeteil (11) die zweiten Kombinationsinformationen aufnimmt,
einen Ausgabeschritt des Ausgabeteils (14), der Informationen bezüglich vorbestimmter Arbeit basierend auf einem Bestimmungsergebnis des Bestimmungsteils und einem Vergleichsergebnis des Vergleichsteils (13) ausgibt,
**dadurch gekennzeichnet, dass**
die zweiten Kombinationsinformationen auf Entwurfsinformationen, die in einer Entwurfszeichnung beschrieben sind, oder Arbeitsinformationen basieren, die in einer Arbeitsanweisung beschrieben sind,
die Anziehen/Lockern-Informationen Angezogen/Gelockert-Zeitinformationen enthalten, wann das eine oder die mehreren der Befestigungsbauglieder angezogen/gelockert werden,
das Vergleichsteil (13) die neuesten Angezogen/Gelockert-Zeitinformationen von den Angezogen/Gelockert-Zeitinformationen als eine Endzeit der vorbestimmten Arbeit bestimmt, und die Endzeit der vorbestimmten Arbeit mit vorbestimmten Arbeitsendzeitinformationen vergleicht, die in den Arbeitsinformationen enthalten sind und
das Ausgabeteil (14) Informationen bezüglich des Fortschritts der vorbestimmten Arbeit basierend auf dem Bestimmungsergebnis des Bestimmungsteils und auf dem Vergleichsergebnis, das durch das Vergleichsteil (13) verglichen wird, ausgibt.

## Revendications

1. Système de gestion de travail (1), comprenant:
un ou une pluralité d'éléments de fixation (150) présentant, chacun, une première étiquette IC (155);
un composant (178, 179) présentant un identificateur de composant (137, 165, 176, 177) recevant une deuxième étiquette IC;
la première étiquette IC (155) présentant des informations basées sur les informations de serrage/desserrage qui sont les informations relatives au serrage/desserrage lorsque le composant présentant la deuxième étiquette IC est serré ou desserré en serrant/desserrant l'élément de fixation et les informations relatives au composant;
une partie d'acquisition d'informations (11) qui est configurée pour acquérir les informations indiquées par la première étiquette IC (155);
une partie de détermination (12) qui est configurée pour déterminer si les premières informations de combinaison combinant les informations indiquées par la première étiquette IC (155) et acquises par la partie d'acquisition d'informations (11) avec les informations indiquées par la deuxième étiquette IC sont correctes,
une partie de comparaison (13) qui est configurée pour comparer les premières informations de combinaison avec les deuxièmes informations de combinaison qui sont établies à l'avance en ce qui concerne la fixation/le détachement du composant par l'élément de fixation (150) lorsque la partie d'acquisition d'informations (11) acquiert les deuxièmes informations de combinaison,
**caractérisé par le fait que**
les deuxièmes informations de combinaison sont basées sur les informations de conception décrites dans un dessin de conception ou les informations de travail décrites dans une instruction de travail,
les informations de serrage/desserrage contiennent les informations de moment de serrage/desserrage auquel l'un ou la pluralité des éléments de fixation sont serrés/desserrés,
la partie de comparaison (13) est configurée pour déterminer les informations de moment de serrage/desserrage les plus anciennes parmi les informations de moment de serrage/desserrage comme moment de début de travail prédéterminé pour serrer/desserrer le composant, et comparer le moment de début de travail prédéterminé avec les informations de moment de début de travail prédéterminé qui sont contenues dans les informations de travail, et
une partie de sortie (14) est configurée pour sortir les informations relatives à la progression du travail prédéterminé sur base du résultat de détermination de la partie de détermination et du résultat de comparaison de la partie de comparaison (13).

2. Système de gestion du travail (1), comprenant:
un ou une pluralité d'éléments de fixation (150) présentant, chacun, une première étiquette IC (155);
un composant (178, 179) présentant un identificateur de composant (137, 165, 176, 177) recevant une deuxième étiquette IC;
la première étiquette IC (155) présentant des informations basées sur les informations de serrage/desserrage qui sont les informations relatives au serrage/desserrage lorsque le composant présentant la deuxième étiquette IC est serré ou desserré en serrant/desserrant l'élément de fixation et les informations relatives au composant,
une partie d'acquisition d'informations (11) qui est configurée pour acquérir les informations indiquées par la première étiquette IC (155);
une partie de détermination (12) qui est configurée pour déterminer si les premières informations de combinaison combinant les informations indiquées par la première étiquette IC (155) et acquises par la partie d'acquisition d'informations (11) avec les informations indiquées par la deuxième étiquette IC sont correctes,
une partie de comparaison (13) qui est configurée pour comparer les premières informations de combinaison avec les deuxièmes informations de combinaison qui sont établies à l'avance en ce qui concerne la fixation/le détachement du composant par l'élément de fixation (150) lorsque la partie d'acquisition d'informations (11) acquiert les deuxièmes informations de combinaison,
**caractérisé par le fait que**
les deuxièmes informations de combinaison sont basées sur les informations de conception décrites dans un dessin de conception ou les informations de travail décrites dans une instruction de travail,
les informations de serrage/desserrage contiennent les informations de moment de serrage/desserrage auquel l'un ou la pluralité des éléments de fixation sont serrés/desserrés,
la partie de comparaison (13) est configurée pour déterminer les informations de moment de serrage/desserrage les plus récentes parmi les informations de moment de serrage/desserrage comme moment de fin de travail prédéterminé pour serrer/desserrer le composant, et pour comparer le moment de fin de travail prédéterminé avec les informations de moment de fin de travail prédéterminé qui sont contenues dans les informations de travail, et
une partie de sortie (14) est configurée pour sortir les informations relatives à la progression du travail prédéterminé sur base du résultat de détermination de la partie de détermination et du résultat de comparaison de la partie de comparaison (13).

3. Système de gestion de travail (1) selon la revendication 1 ou 2, dans lequel les deuxièmes informations de combinaison sont basées sur les informations de plateau de service d'un plateau de service (4) et comporte:
une partie en retrait (192) dans laquelle est monté l'élément de fixation (150);
une partie de lecture/écriture qui est prévue au niveau de la partie en retrait (192) et lit/écrit la première étiquette IC (155); et
une partie de communication (183, 184) qui est connectée à la partie de lecture/écriture.

4. Procédé de gestion de travail exécuté par un système de gestion de travail (1), comportant:
une partie d'acquisition d'informations (11);
une partie de détermination (12);
une partie de sortie (14);
une partie de comparaison (13);
un ou une pluralité d'éléments de fixation (150) présentant, chacun, une première étiquette IC (155); et
un composant (178, 179) présentant un identificateur de composant (137, 165, 176, 177) recevant une deuxième étiquette IC;
le procédé de gestion de travail comprenant:
une étape d'acquisition d'informations de la partie d'acquisition d'informations (11) acquérant les informations de serrage/desserrage qui sont les informations relatives au serrage/desserrage lorsque le composant présentant la deuxième étiquette IC est serré ou desserré en serrant/desserrant l'élément de fixation et les informations relatives au composant;
une étape de détermination de la partie de détermination déterminant si les premières informations de combinaison combinant les informations indiquées par la première étiquette IC (155) et acquises par la partie d'acquisition d'informations (11) avec les informations indiquées par la deuxième étiquette IC sont correctes, et
une étape de comparaison de la partie de comparaison (13) comparant les premières informations de combinaison avec les deuxièmes informations de combinaison qui sont établies à l'avance en ce qui concerne la fixation/le détachement du composant par l'élément de fixation lorsque la partie d'acquisition d'informations acquiert les deuxièmes informations de combinaison,
une étape de sortie de la partie de sortie (14) sortant les informations relatives à un travail prédéterminé sur base d'un résultat de détermination à l'étape de détermination et du résultat de comparaison de la partie de comparaison (13),
**caractérisé par le fait que**
les deuxièmes informations de combinaison sont basées sur les informations de conception décrites dans un dessin de conception ou les informations de travail décrites dans une instruction de travail,
les informations de serrage/desserrage contiennent les informations de moment de serrage/desserrage auquel l'un ou la pluralité des éléments de fixation sont serrés/desserrés,
la partie de comparaison détermine les informations de moment de serrage/desserrage les plus anciennes parmi les informations de moment de serrage/desserrage comme moment de début de travail prédéterminé pour serrer/desserrer le composant, et compare le moment de début de travail prédéterminé avec les informations de moment de début de travail prédéterminé qui sont contenues dans les informations de travail, et
la partie de sortie (14) sort les informations relatives à la progression de travail prédéterminé sur base du résultat de détermination de la partie de détermination et du résultat de comparaison de la partie de comparaison.

5. Procédé de gestion de travail exécuté par un système de gestion de travail (1), comportant:
une partie d'acquisition d'informations (11);
une partie de détermination (12);
une partie de sortie (14);
une partie de comparaison (13);
un ou une pluralité d'éléments de fixation (150) présentant, chacun, une première étiquette IC (155); et
un composant (178, 179) présentant un identificateur de composant (137, 165, 176, 177) recevant une deuxième étiquette IC;
le procédé de gestion de travail comprenant:
une étape d'acquisition d'informations de la partie d'acquisition d'informations (11) acquérant les informations de serrage/desserrage qui sont les informations relatives au serrage/desserrage lorsque le composant présentant la deuxième étiquette IC est serré ou desserré en serrant/desserrant l'élément de fixation et les informations relatives au composant;
une étape de détermination de la partie de détermination déterminant si les premières informations de combinaison combinant les informations indiquées par la première étiquette IC (155) et acquises par la partie d'acquisition d'informations (11) avec les informations indiquées par la deuxième étiquette IC sont correctes, et
une étape de comparaison de la partie de comparaison (13) comparant les premières informations de combinaison avec les deuxièmes informations de combinaison qui sont établies à l'avance en ce qui concerne la fixation/le détachement du composant par les éléments de fixation lorsque la partie d'acquisition d'informations acquiert les deuxièmes informations de combinaison,
une étape de sortie de la partie de sortie (14) sortant les informations relatives à un travail prédéterminé sur base d'un résultat de détermination à l'étape de détermination et comparant le résultat de la partie de comparaison (13),
**caractérisé par le fait que**
les deuxièmes informations de combinaison sont basées sur les informations de conception décrites dans un dessin de conception ou les informations de travail décrites dans une instruction de travail,
les informations de serrage/desserrage contiennent les informations de moment de serrage/desserrage auquel l'un ou la pluralité des éléments de fixation sont serrés/ desserrés,
la partie de comparaison détermine les informations de moment de serrage/desserrage les plus récentes parmi les informations de moment de serrage/desserrage comme moment de fin de travail prédéterminé, et compare le moment de fin de travail prédéterminé avec les informations de moment de fin de travail prédéterminé qui sont contenues dans les informations de travail, et
la partie de sortie sort les informations relatives à la progression du travail prédéterminé sur base du résultat de détermination de la partie de détermination et du résultat de comparaison de la partie de comparaison.
